# EUROPÄISCHE PATENTSCHRIFT

(11) **EP 1 897 161 B1**
(45) Veröffentlichungstag und Bekanntmachung des Hinweises auf die Patenterteilung: **15.04.2009**
(21) Anmeldenummer: 06753828.0
(22) Anmeldetag: 24.05.2006
(51) Int. Cl.: H01M 8/02, H01M 8/24

(54) **BIPOLARPLATTE, VERFAHREN ZUR HERSTELLUNG EINER BIPOLARPLATTE UND BRENNSTOFFZELLENBLOCK-ANORDNUNG**
BIPOLAR PLATE, METHOD FOR PRODUCING A BIPOLAR PLATE AND A FUEL CELL BLOCK ARRANGEMENT
PLAQUE BIPOLAIRE, PROCEDE DE FABRICATION D'UNE PLAQUE BIPOLAIRE ET ENSEMBLE BLOC DE PILES A COMBUSTIBLE

(30) Priorität: 27.06.2005 DE 102005031081
(43) Veröffentlichungstag der Anmeldung: 12.03.2008
(73) Patentinhaber: DLR Deutsches Zentrum für Luft- und Raumfahrt e.V., 51147 Köln (DE)
(72) Erfinder: BRINNER, Andreas, 71277 Rutesheim (DE); MAAG, Tilo, 76327 Pfinztal (DE)
(74) Vertreter: Regelmann, Thomas
(86) Internationale Anmeldenummer: PCT/EP2006/004928
(87) Internationale Veröffentlichungsnummer: WO 2007/000218

(56) Entgegenhaltungen:
- EP-B1- 0 851 518
- WO-A2-02/15311
- DE-A1- 10 301 052
- DE-A1-1102004 050 92

## Beschreibung

Die Erfindung betrifft eine Bipolarplatte für elektrochemische Anwendungen, umfassend eine erste Decklage aus einem metallischen Material, eine zweite Decklage aus einem metallischen Material, und eine Stützlage aus einem metallischen Material, welche zwischen der ersten Decklage und der zweiten Decklage angeordnet ist und mit der ersten Decklage und der zweiten Decklage verbunden ist, wobei die Stützlage mindestens eine Reihe an Anlagebereichen für die erste Decklage und/oder die zweite Decklage aufweist und zwischen benachbarten Anlagebereichen Freiräume gebildet sind.

Die Erfindung betrifft ferner ein Verfahren zur Herstellung einer Bipolarplatte, bei dem eine erste Decklage aus einem metallischen Material hergestellt wird, eine Stützlage aus einem metallischen Material mit Querstegen und zwischen benachbarten Querstegen liegenden Freiräumen hergestellt wird, eine zweite Decklage aus einem metallischen Material hergestellt wird, und die erste Decklage und die zweite Decklage über die Stützlage miteinander verbunden werden.

Ferner betrifft die Erfindung eine Brennstoffzellenblock-Anordnung, umfassend einen Brennstoffzellenblock.

Bipolarplatten werden in einem Brennstoffzellenblock (Brennstoffzellenstapel oder Brennstoffzellen-Stack) eingesetzt, um Brennstoffzellen elektrisch hintereinander schalten zu können. Über eine Bipolarplatte werden die Anode und die Kathode benachbarter Brennstoffzellen elektrisch miteinander verbunden.

Aus der DE 697 05 016 T2 (EP 0 851 518 B1) ist eine flüssigkeitsgekühlte bipolare Platte zur Trennung benachbarter erster und zweiter Zellen einer PEM-Brennstoffzelle bekannt, welche eine erste korrosionsbeständige Metalltafel mit einer zu Wasserstoff weisenden Seite und eine zweite korrosionsbeständige Metalltafel mit einer zu Sauerstoff weisenden Seite umfasst. Die Metalltafeln weisen eine Vielzahl von Stegen auf, die eine Vielzahl von Nuten definieren und zur Verteilung von Wasserstoff bzw. Sauerstoff dienen. Die erste Metalltafel und die zweite Metalltafel sind durch eine Trennmetalltafel voneinander getrennt, die durch Hartlötstellen mit der ersten Metalltafel und der zweiten Metalltafel metallurgisch verbunden ist. Die Metalltrenntafel kann gewellt perforiert sein.

Aus der DE 103 01 052 A1 ist eine Bipolarplatteneinheit mit zwei Teilplatten für eine elektrochemische Zelle bekannt, wobei wenigstens eine der Hauptoberflächen der Teilplatten eine Kanalstruktur aufweist und wobei die Teilplatten entlang ihrer Hauptoberflächen so übereinander angeordnet sind, dass zwischen den einander zugewandten Hauptoberflächen ein inneres Kanalsystem gegeben ist. Im Randbereich der Teilplatte sind Mittel zum Abdichten des inneren Kanalsystems gegenüber der Außenumgebung vorgesehen, die die Teilplatten beabstanden.

Aus der DE 10 2004 016 318 A1 ist eine Bipolarplatte für elektrochemische Systeme bekannt, welche eine erste Platte mit einem ersten Flowfield zur Medienverteilung sowie eine zweite Platte mit einem zweiten Flowfield zur Medienverteilung enthält, wobei die erste Platte im Bereich des ersten Flowfields zumindest bereichsweise einen ebenen Flächenabschnitt aufweist, aus welchem herausragende diskrete und voneinander beabstandete Erhebungen verteilt angeordnet sind.

Der Erfindung liegt die Aufgabe zugrunde, eine Bipolarplatte der eingangs genannten Art bereitzustellen, welche auf einfache Weise herstellbar ist und welche vorteilhafte Eigenschaften aufweist.

Diese Aufgabe wird bei der eingangs genannten Bipolarplatte erfindungsgemäß dadurch gelöst, dass mindestens eine Durchgangsöffnung zur Führung von Brennstoff und/oder Oxidator vorgesehen ist und dass im Bereich der mindestens einen Durchgangsöffnung zwischen der ersten Decklage und der zweiten Decklage ein Einlegeelement angeordnet ist, über welches sich Punktkräfte flächig einleiten lassen.

Erfindungsgemäß wird eine Bipolarplatte bereitgestellt, welche eine gute elektrische Leitfähigkeit und eine gute thermische Leitfähigkeit aufweist. Ferner lässt sich eine Langzeitgasdichtigkeit bei hoher mechanischer Stabilität bereitstellen. Da die Bipolarplatte als Sandwichstruktur mit zwei oder drei Materiallagen hergestellt werden kann, lässt sich diese kostengünstig und auch in großen Stückzahlen produzieren.

Die entsprechende Bipolarplatte lässt sich insbesondere über Blechbearbeitungsverfahren wie Blechstanzen, Blechfalten oder Zusammenlegen herstellen. Die Verbindung zwischen Decklagen und Stützlage lässt sich auf einfache Weise beispielsweise über Ofenlötverfahren in einem Durchlaufofen erreichen.

Es lassen sich billige Grundmaterialien beispielsweise auf Aluminium-, Magnesium- oder Stahlbasis einsetzen. Die Grundmaterialien können bereits vorbeschichtet sein, beispielsweise mit einer Lotschicht und/oder einer Korrosionsschutzschicht.

Durch die einfache Herstellungsweise lässt sich eine einfache Anpassung an eine Anwendung erreichen, beispielsweise bezüglich Medienanpassung (wie beispielsweise Anpassung an ein Kühlmittel), Größenanpassung oder Stückzahlanpassung.

Es lässt sich auf einfache Weise eine hohe Gasdichtigkeit bei hoher elektrischer Leitfähigkeit und hoher thermischer Leitfähigkeit erreichen.

Durch die Freiräume lassen sich Kühlmittelkanäle ausbilden, über die sich die Bipolarplatte und damit direkt eine Elektrode kühlen lässt. Dadurch ist eine optimale direkte Kühlbarkeit von Elektrodenflächen beispielsweise einer Brennstoffzelle direkt am Ort der Entstehung der Abwärme bereitgestellt. Dadurch wiederum lässt sich beispielsweise die Betriebsstromdichte einer Brennstoffzelle erhöhen (beispielsweise um einen Faktor 2 bis 3) gegenüber indirekten Kühlverfahren.

Durch das Vorsehen von Freiräumen ist auch das Gewicht der Bipolarplatte im Vergleich zu einem massiven Metallkörper verringert.

Es ist mindestens eine Durchgangsöffnung zur Führung von Brennstoff und/oder Oxidator vorgesehen. Eine Durchgangsöffnung kann selber einen Kanal zur Führung von Gas bilden oder in dieser Durchgangsöffnung kann eine Leitung für die Gasführung angeordnet sein.

Im Bereich der mindestens einen Durchgangsöffnung zwischen der ersten Decklage und der zweiten Decklage ist eine Einlegeelement angeordnet. Die Stützlage weist insbesondere einen Freiraum auf, welcher beispielsweise ausgestanzt ist, damit das Einlegeelement aufgenommen werden kann. Das Einlegeelement hat insbesondere im wesentlichen eine Höhe, welche dem Abstand zwischen der ersten Decklage und der zweiten Decklage entspricht. Über das Einlegeelement lassen sich Punktkräfte flächig einleiten, so dass die mechanische Stabilität erhöht wird. Ferner lässt sich über ein Einlegeelement auch eine gute Abdichtung der Durchgangsöffnung zu dem Innenraum der Bipolarplatte erreichen.

Insbesondere erstrecken sich die Freiräume zwischen der ersten Decklage und der zweiten Decklage und/oder zwischen einer Decklage und einem Anlagebereich der Stützstruktur an die andere Decklage. Dadurch lässt sich ein überwiegender Anteil des Volumens zwischen der ersten Decklage und der zweiten Decklage mit Freiräumen versehen. Es lässt sich dann das Gewicht der Bipolarplatte gering halten. Ferner lässt sich dadurch über Kühlmitteldurchströmung der Bipolarplatte eine effektive Wärmeabführung erreichen.

Insbesondere sind die Freiräume im wesentlichen parallel zueinander ausgerichtet. Dadurch lässt sich die Bipolarplatte auf einfache Weise herstellen und es ist eine effektive Kühlbarkeit gewährleistet.

Insbesondere erstrecken sich die Freiräume zwischen einer ersten Stirnseite der Bipolarplatte und einer gegenüberliegenden zweiten Stirnseite der Bipolarplatte. Eine solche Bipolarplatte lässt sich auf einfache Weise herstellen. Ferner lässt sich auf einfache Weise Kühlmittel durch die Bipolarplatte durchführen.

Insbesondere sind die Freiräume zu den Stirnseiten offen. Dadurch lässt sich auf einfache Weise Kühlmittel durch die Bipolarplatte durchführen, um eine direkte Elektrodenkühlung zu erreichen.

Insbesondere weisen die Freiräume jeweils eine Längsachse auf, welche im wesentlichen geradlinig ist. Dadurch ist die Bipolarplatte bezüglich der Freiräume "durchsichtig", das heißt es sind gerade Kanäle gebildet, welche von einer Stirnseite zur gegenüberliegenden Stirnseite reichen. Eine solche Bipolarplatte lässt sich auf einfache Weise herstellen und Kühlmittel lässt sich auf einfache Weise durchführen.

Insbesondere weisen die Freiräume jeweils eine Längsachse auf, welche im wesentlichen parallel zur ersten Decklage ist und welche im wesentlichen parallel zur zweiten Decklage ist. (Die erste Decklage und die zweite Decklage sind üblicherweise parallel zueinander ausgerichtet.) Die entsprechenden Freiräume lassen sich dadurch auf einfache Weise herstellen.

Weiterhin ist es günstig, wenn die Freiräume jeweils eine Längsachse aufweisen, welche quer und insbesondere senkrecht zu einer Stirnseite der Bipolarplatte ist. Dadurch ist eine einfache Herstellbarkeit gewährleistet und Kühlmittel lässt sich auf einfache Weise durchführen.

Insbesondere ist mindestens 70 % des Volumenbereichs zwischen der ersten Decklage und der zweiten Decklage durch Freiräume eingenommen, das heißt nur ein geringer Anteil des Volumenbereichs ist durch das Material der Stützlage eingenommen.

Es ist vorgesehen, dass benachbarte Freiräume fluiddicht voneinander getrennt sind, um eine effektive Kühlung erreichen zu können.

Insbesondere weist die Stützlage Stege auf, welche quer zu der ersten Decklage und quer zur zweiten Decklage orientiert sind. Über diese Stege werden die erste Decklage und die zweite Decklage in einem Abstand voneinander gehalten und dabei über die Stützlage verbunden. Die Stege können dabei senkrecht zu den Decklagen liegen oder in einem Winkel. Die Stege können geradlinig ausgebildet sein oder auch gebogen sein. Beispielsweise können sie sinusförmig gebogen sein.

Günstig ist es, wenn die Freiräume jeweils im wesentlichen den gleichen Querschnitt aufweisen. Dadurch lässt sich die Bipolarplatte auf einfache Weise herstellen. Beispielsweise lässt sich eine Stützlage biegen bzw. falten oder eine Stützlage lässt sich durch Rollung herstellen.

Aus dem gleichen Grund ist es günstig, wenn die Stützlage eine periodische Struktur hat. Diese periodische Struktur lässt sich auf einfache Weise durch Biegen oder Faltung herstellen bzw. sie lässt sich auf einfache Weise durch Materialwalzung oder Rollung herstellen.

Ganz besonders vorteilhaft ist es, wenn die Freiräume als Kühlmittelkanäle ausgebildet sind. Dadurch lässt sich auf effektive Weise eine direkte Elektrodenflächenkühlung über die Bipolarplatte erreichen.

Günstigerweise liegen die Anlagebereiche der mindestens einen Reihe an Anlagebereichen im wesentlichen in einer Ebene. Dadurch lässt sich auf einfache Weise eine Verbindung zwischen einer Decklage und der Stützlage erreichen.

Günstigerweise ist zwischen Anlagebereichen der Stützlage und der ersten Decklage und/oder der zweiten Decklage eine Verbindungsmittelschicht angeordnet. Über diese Verbindungsmittelschicht lässt sich die Stützlage mit der entsprechenden Decklage verbinden.

Die Verbindung lässt sich auf einfache Weise herstellen, wenn die Verbindungsmittelschicht eine Lötschicht oder Klebemittelschicht aus elektrisch leitfähigem Klebemittel ist. Die Lötschicht kann beispielsweise durch Hartlötung oder Weichlötung in einem Ofen hergestellt werden. Insbesondere ist das Ausgangsmaterial bereits mit einer Lotbeschichtung versehen und bei der Herstellung werden die entsprechenden Lagen über Erhitzung in einem Ofen miteinander verbunden.

Es kann vorgesehen sein, dass die erste Decklage und/oder die zweite Decklage einstückig ausgebildet sind. Diese werden beispielsweise durch Blechbearbeitungsverfahren aus einem dünnen Metallblech hergestellt.

Es ist auch möglich, dass die Stützlage einstückig ausgebildet ist. Diese wird beispielsweise durch Faltung oder Biegung eines Metallblechs hergestellt.

Es ist auch möglich, dass die Stützlage einstückig entweder mit der ersten Decklage oder der zweiten Decklage verbunden ist. Eine solche Decklagen-Stützlagen-Kombination lässt sich beispielsweise durch Walzung eines Metallblechs herstellen. An diesem lassen sich Stege ausbilden, welche die Stützlage bilden.

Die erste Stützlage kann eine Faltstruktur oder Wellenstruktur sein, welche beispielsweise durch Biegen oder Faltung eines Metallblechs hergestellt wird.

Insbesondere sind die erste Decklage und die zweite Decklage gasdicht ausgebildet. Dadurch kann an ihnen eine Gasverteilungsstruktur angeordnet bzw. ausgebildet werden, über die eine Elektrode mit Brennstoff oder Oxidator versorgbar ist.

Es ist auch günstig, wenn an der ersten Decklage und/oder der zweiten Decklage und/oder der Stützlage eine Schutzbeschichtung angeordnet ist. Diese Schutzbeschichtung ist insbesondere eine Korrosionsschutzbeschichtung beispielsweise gegen Kühlmittelkorrosion.

Günstig ist es, wenn mindestens eine Durchgangsöffnung für ein Spannelement vorgesehen ist. Über Spannelemente lassen sich die Brennstoffzellen in einem Brennstoffzellenblock miteinander verspannen und in einem Rahmen halten. Durch eine Durchgangsöffnung lässt sich ein solches Spannelement durchführen. Durchgangsöffnungen lassen sich auf einfache Weise in einer erfindungsgemäßen Bipolarplatte herstellen.

Insbesondere ist das Einlegeelement ein Vollmaterialelement, um eine hohe mechanische Stabilität zu erreichen.

Günstigerweise ist das Einlegeelement mit der ersten Decklage und der zweiten Decklage verbunden, beispielsweise über eine Lötschicht.

Es kann vorgesehen sein, dass in der Nähe eines Einlegeelements die Stützlage so ausgebildet ist, dass eine Umströmung des Einlegeelements von in Freiräumen strömendem Fluid ermöglicht ist. Dies lässt sich beispielsweise dadurch erreichen, dass Querstege im Bereich des Einlegeelements abgeflacht werden.

Wenn eine Durchgangsöffnung als Fluidführungsöffnung dient, dann ist diese insbesondere bezüglich Freiräumen abgedichtet.

Der Erfindung liegt ferner die Aufgabe zugrunde, ein Verfahren zur Herstellung einer Bipolarplatte der eingangs genannten Art bereitzustellen, welches einfach und kostengünstig durchführbar ist.

Diese Aufgabe wird erfindungsgemäß dadurch gelöst, dass mindestens eine Durchgangsöffnung in der Bipolarplatte hergestellt wird und dass im Bereich der Durchgangsöffnung ein Einlegeelement aus Vollmaterial eingelegt wird.

Durch das erfindungsgemäße Verfahren lässt sich eine Bipolarplatte auf einfache Weise herstellen, da eine Decklage entweder mit integrierter Stützlage oder mit getrennter Stützlage und eine weitere Decklage auf einfache Weise beispielsweise aus einem Metallblech über Blechbearbeitungsverfahren wie Stanzen, Falten usw. herstellbar sind.

Insbesondere lassen sich "konventionelle" und damit preisgünstige metallische Materialien verwenden.

Weitere Vorteile wurden bereits im Zusammenhang mit der erfindungsgemäßen Bipolarplatte erläutert; die erfindungsgemäße Bipolarplatte lässt sich mit dem erfindungsgemäßen Verfahren herstellen.

Insbesondere wird die zweite Decklage mit der Stützlage verbunden, wobei die Verbindung über Lötung oder Klebung erfolgen kann.

Bei einer Ausführungsform wird die erste Decklage mit der Stützlage über Lötung oder Klebung verbunden.

Bei einer alternativen Ausführungsform werden die erste Decklage und die Stützlage integral hergestellt, das heißt insbesondere, dass die erste Decklage und die Stützlage einstückig miteinander verbunden ausgebildet werden.

Insbesondere kann dies durch Walzung eines Metallblechs erfolgen, wobei durch die Walzung Querstege hergestellt werden, die die Stützlage bilden.

Günstig ist es, wenn die erste Decklage und/oder die zweite Decklage aus einem Metallblech hergestellt werden.

Es ist beispielsweise vorgesehen, dass das Ausgangsmaterial für die erste Decklage und/oder die zweite Decklage und/oder die Stützlage ein mit einer Schutzbeschichtung versehenes Metallblech verwendet wird. Dadurch ist kein zusätzlicher Aufwand für eine nachträgliche Beschichtung notwendig.

Günstig ist es, wenn mindestens eine Durchgangsöffnung in der Bipolarplatte hergestellt wird. Über eine solche Durchgangsöffnung lassen sich Kanäle für die Gasführung bereitstellen bzw. es lassen sich Spannelemente durchtauchen.

Wenn im Bereich der Durchgangsöffnung ein Einlegeelement aus Vollmaterial eingelegt wird, dann lässt sich die Stabilität der Bipolarplatte erhöhen, da insbesondere Punktkräfte flächenmäßig eingeleitet werden können.

Es ist auch möglich, dass auf der Bipolarplatte eine Gasverteilungsstruktur hergestellt wird oder angeordnet wird.

Beispielsweise wird die Gasverteilungsstruktur durch Anlegen einer Schwammstruktur beispielsweise aus einem metallischen Schwamm hergestellt. Dieser Schwamm wird plattgedrückt. Dadurch lässt sich auch eine Gasdiffusionsschicht einspannen.

Der Erfindung liegt ferner die Aufgabe zugrunde, eine Brennstoffzellenblock-Anordnung bereitzustellen, welche vorteilhafte Eigenschaften aufweist.

Diese Aufgabe wird bei der eingangs genannten Brennstoffzellenblock-Anordnung erfindungsgemäß dadurch gelöst, dass zwischen mindestens einer ersten Brennstoffzelle und einer zweiten Brennstoffzelle eine erfindungsgemäße Bipolarplatte vorgesehen ist.

Die erfindungsgemäße Brennstoffzellenblock-Anordnung weist die bereits im Zusammenhang mit der erfindungsgemäßen Bipolarplatte erläuterten Vorteile auf.

Insbesondere ist die mindestens eine Bipolarplatte so angeordnet, dass Kühlmittelkanäle im wesentlichen horizontal liegen. Dadurch lässt sich eine einfache Kühlmitteldurchführung durch die Bipolarplatte erreichen; insbesondere lässt sich auf einfache Weise Kühlluft durch die Bipolarplatte durchführen. Durch eine solche Strömungsführung lässt sich auf effektive Weise Wärme direkt von Elektrodenflächen abführen.

Beispielsweise ist eine Brennstoffzelle so angeordnet und ausgebildet, dass Brennstoff und Oxidator im wesentlichen in vertikaler Richtung die Brennstoffzelle durchströmen können. Dadurch lässt sich eine effektive Brennstoffbereitstellung und Oxidatorbereitstellung für die Brennstoffzelle erreichen.

Wenn ein Kühlmitteleintritt in Kühlmittelkanäle der Bipolarplatte an derjenigen Stelle liegt, an welcher das heißeste Medium austritt, dann lässt sich eine effektive Kühlung erzielen.

Insbesondere ist der Austritt für das heißeste Medium ein Luftaustritt für Oxidatorluft (welche sauerstoffverarmt ist und wasserdampfangereichert).

Ganz besonders vorteilhaft ist es, wenn die mindestens eine Bipolarplatte mit einer offenen Stirnseite einem Kühlergrill zugewandt ist. Dadurch lässt sich auf einfache Weise Kühlluft als Kühlmittel der Bipolarplatte zuführen, um wiederum eine direkte Kühlung von Elektrodenflächen zu erreichen.

Aus dem gleichen Grund ist es günstig, wenn die mindestens eine Bipolarplatte mit einer offenen Stirnseite einem Ventilator zugewandt angeordnet ist. Dadurch kann Kühlluft, welche von dem Ventilator angesaugt wird, durch die Bipolarplatte hindurchströmen und damit lässt sich eine effektive Elektrodenkühlung erreichen.

Ganz besonders vorteilhaft ist es, wenn die mindestens eine Bipolarplatte zwischen einem Kühlergrill und einem Ventilator angeordnet ist, so dass vom Ventilator angezogene Kühlluft, welche durch den Kühlergrill einströmt, durch die Bipolarplatte strömen kann und für eine Kühlung sorgen kann.

Eine effektive Kühlung lässt sich erreichen, wenn zwischen dem Brennstoffzellenblock und dem Ventilator eine Abdeckung zur Kühlluftführung angeordnet ist. Durch die Abdeckung lässt sich sicherstellen, dass die vom Ventilator angesaugte Luft durch die mindestens eine Bipolarplatte durchgeführt wird. Dadurch wiederum lässt sich eine effektive Kühlung erreichen.

Die nachfolgende Beschreibung bevorzugter Ausführungsformen dient im Zusammenhang mit der Zeichnung der näheren Erläuterung der Erfindung. Es zeigen:
- Figur 1: eine schematische Darstellung eines Ausführungsbeispiels eines Brennstoffzellen-Blocks;
- Figur 2: eine Teilschnittansicht eines ersten Ausführungsbeispiels einer erfindungsgemäßen Bipolarplatte;
- Figur 3: eine Teilschnittansicht eines zweiten Ausführungsbeispiels einer erfindungsgemäßen Bipolarplatte;
- Figur 4: eine vergrößerte Darstellung des Bereichs A gemäß Figur 4;
- Figur 5: eine Teilschnittdarstellung eines weiteren Ausführungsbeispiels einer erfindungsgemäßen Bipolarplatte;
- Figur 6: eine Teilschnittdarstellung eines weiteren Ausführungsbeispiels einer erfindungsgemäßen Bipolarplatte;
- Figur 7: eine Teilschnittdarstellung eines weiteren Ausführungsbeispiels einer erfindungsgemäßen Bipolarplatte;
- Figur 8: eine Teilschnittdarstellung der Bipolarplatte gemäß Figur 3 im Bereich einer Durchgangsöffnung;
- Figur 9: eine Draufsicht auf die Bipolarplatte gemäß Figur 7 in der Richtung B;
- Figur 10: eine Teilschnittdarstellung der Bipolarplatte gemäß Figur 3 im Bereich eines äußeren Endes;
- Figur 11: eine Gesamtdarstellung eines Ausführungsbeispiels einer erfindungsgemäßen Bipolarplatte; und
- Figur 12: ein Ausführungsbeispiel einer erfindungsgemäßen Brennstoffzellenblock-Anordnung.

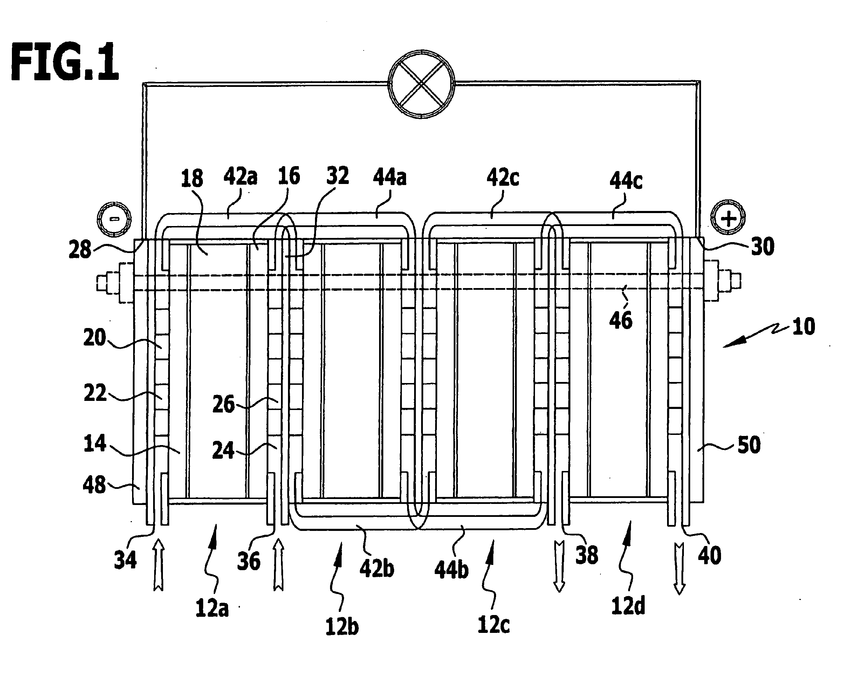

Ein Ausführungsbeispiel eines Brennstoffzellenblocks, welches in Figur 1 schematisch gezeigt und dort mit 10 bezeichnet ist, umfasst eine Mehrzahl von Brennstoffzellen 12a, 12b, 12c, 12d. Diese Brennstoffzellen 12a, 12b, 12c, 12d sind in einem Stapel angeordnet. Ein solcher Brennstoffzellen-Block 10 wird deshalb auch als Stack oder Brennstoffzellenstapel bezeichnet.

Die einzelnen Brennstoffzellen (beispielsweise die Brennstoffzelle 12a) umfassen eine Anode 14 und eine Kathode 16.

Bei Polymermembran-Brennstoffzellen (PEFC) ist zwischen der Anode 14 und der Kathode 16 als Elektrolyt eine protonenleitende Membran 18 angeordnet. Diese Membran 18 bildet auch den Träger für die Anode 14 und die Kathode 16. Sie dient weiterhin als Separator für die gasförmigen Reaktanten. Als Brennstoff wird insbesondere Wasserstoff eingesetzt, welcher der Anode 14 zugeführt wird. Als Oxidator wird Sauerstoff und insbesondere Luftsauerstoff eingesetzt, welcher der Kathode 16 zugeführt wird.

In der entsprechenden Brennstoffzelle 12a wird chemische Energie durch die kalte Verbrennung des Brennstoffs mit dem Oxidator in elektrische Energie umgewandelt.

Zur Zuführung von Brennstoff zur Anode 14 und zur Abführung von nichtreagiertem Brennstoff ist eine Gasverteilungsstruktur 20 vorgesehen, welche Kanäle 22 aufweist, durch die Brennstoff führbar und der Anode 14 zuführbar ist.

Auf die gleiche Weise ist der Kathode 16 eine Gasverteilungsstruktur 24 zugeordnet, welche Kanäle 26 aufweist. Über die Gasverteilungsstruktur 24 lässt sich Oxidator der Kathode 16 zuführen und nicht-verbrauchter Oxidator lässt sich abführen. Ferner lässt sich Wasserdampf abführen.

Die Brennstoffzellen 12a, 12b, 12c, 12d sind in Reihe geschaltet. Der Brennstoffzellenblock 10 weist einen ersten elektrischen Anschluss 28 und einen zweiten elektrischen Anschluss 30 auf, über die sich die Brennstoffzellenspannung als Summe der Einzelspannungen der Brennstoffzellen 12a, 12b, 12c, 12d abgreifen lässt.

Zwischen benachbarten Brennstoffzellen 12a, 12b bzw. 12b, 12c bzw. 12c, 12d sind jeweils Bipolarplatten 32 angeordnet, welche die benachbarten Brennstoffzellen elektrisch miteinander verbinden (um die Reihenschaltung zu realisieren), diese jedoch fluiddicht und insbesondere voneinander trennen.

Es ist insbesondere vorgesehen, dass der Brennstoffzellenblock 10 einen Anschluss 34 zur Einkopplung von Brennstoff und einen Anschluss 36 zur Einkopplung von Oxidator sowie einen Anschluss 38 zur Auskopplung von nichtreagiertem Brennstoff und einen Anschluss 40 zur Auskopplung von nichtverbrauchtem Oxidator (und Wasser) umfasst. Die Brennstoffführung und die Oxidatorführung ist so ausgestaltet, dass alle Brennstoffzellen 12a, 12b, 12c, 12d über die Anschlüsse 34, 36 mit Brennstoff bzw. Oxidator versorgt werden können.

Dazu sind insbesondere die Gasverteilungsstrukturen 20 für Brennstoff benachbarter Brennstoffzellen 12a, 12b bzw.12b, 12c bzw. 12c, 12d über Leitungen 42a, 42b, 42c verbunden. Solche Leitungen können beispielsweise über Kanäle realisiert sein.

Entsprechend sind die Gasverteilungsstrukturen 24 für Oxidator über Leitungen oder Kanäle 44a, 44b, 44c miteinander verbunden.

Durch die Leitungen 42a, 42b, 42c wir eine fluidwirksame Verbindung zwischen dem (Eingangs-)Anschluss 34 und dem (Ausgangs-)Anschluss 38 bereitgestellt. Durch die Leitungen 44a, 44b, 44c wird eine fluidwirksame Verbindung zwischen dem (Eingangs-)Anschluss 36 und dem (Ausgangs-)Anschluss 40 bereitgestellt.

Die Brennstoffzellen 12a, 12b, 12c, 12d sind in dem Brennstoffzellenblock 10 beispielsweise über Spannstangen als Spannelemente 46 zusammengehalten. (In Figur 1 ist aus darstellerischen Gründen nur ein Spannelement 46 gezeigt.) Beispielsweise sind zur Verspannung der Brennstoffzellen 12a, 12b, 12c, 12d äußere Rahmenplatten 48, 50 vorgesehen, zwischen welchen die einzelnen Brennstoffzellen 12a, 12b, 12c, 12d verklemmt werden.

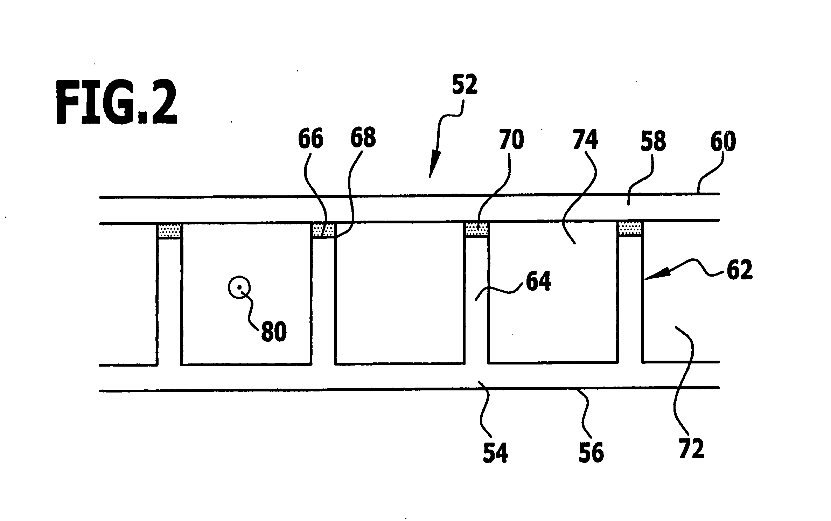

Ein erstes Ausführungsbeispiel einer Bipolarplatte ist in Figur 2 gezeigt und dort mit 52 bezeichnet. Diese Bipolarplatte 52 umfasst eine erste Decklage 54 mit einer im wesentlichen ebenen Außenseite 56. Diese ebene Außenseite ist der Anode 14 oder der Kathode 16 einer Brennstoffzelle zugewandt. An ihr sitzt die Gasverteilungsstruktur 20 oder die Gasverteilungsstruktur 24.

Die erste Decklage 54 ist aus einem metallischen Material wie beispielsweise Aluminium hergestellt.

Die Bipolarplatte 52 umfasst eine zweite Decklage 58 mit einer im wesentlichen ebenen Außenseite 60, welche der anderen Elektrode (Kathode 16 oder Anode 14) zugewandt ist. An ihr sitzt dann entsprechend die Gasverteilungsstruktur 24 oder die Gasverteilungsstruktur 20.

Auch die zweite Decklage 58 ist aus einem metallischen Material wie beispielsweise Aluminium hergestellt.

Die zweite Decklage ist mit der ersten Decklage 54 über eine Stützlage 62 verbunden. Bei dem In Figur 2 gezeigten Ausführungsbeispiel ist die Stützlage 62 einstückig mit der ersten Decklage 54 verbunden und die zweite Decklage 58 ist über eine Platte mit im wesentlichen parallelen Seiten gebildet.

Die Stützlage 62 umfasst Querstege 64, welche beabstandet zueinander sind und sich im wesentlichen senkrecht zu den Außenseiten 56, 60 der ersten Decklage 54 und der zweiten Decklage 58 erstrecken. Die Querstege 64 weisen einen Stirnbereich 66 auf, welcher als Anlagebereich 68 für die zweite Decklage 58 ausgebildet ist. Die Anlagebereiche 68 der Querstege 64 liegen dabei im wesentlichen auf einer Ebene. Über diese Anlagebereiche 68 lässt sich die erste Decklage 54 an der Stützlage 62 fixieren und damit über die Stützlage 62 mit der ersten Decklage 54 verbinden.

Zur Verbindung der zweiten Decklage 58 und der zweiten Stützlage 62 ist eine Verbindungsmittelschicht 70 an den Anlagebereichen 68 angeordnet. Bei dieser Verbindungsmittelschicht 70 handelt es sich um eine Lötschicht oder um eine Klebemittelschicht aus einem Klebemittel mit elektrischer Leitfähigkeit.

Über die Verbindungsmittelschicht 70 ist die erste Decklage 54 über die Stützlage 62 mit der zweiten Decklage 58 elektrisch leitend verbunden.

Die erste Decklage 54 ist gasdicht ausgebildet. Ebenso ist die zweite Decklage 58 gasdicht ausgebildet, so dass Brennstoff und Oxidator nicht in einen Zwischenbereich 72 zwischen der ersten Decklage 54 und der zweiten Decklage 58 eindringen kann.

Zwischen benachbarten Querstegen 64 sind kanalförmige Freiräume 74 gebildet. Wenn die Querstege 64 senkrecht zu der Decklage 54, 58 stehen, dann weisen die Freiräume 74 einen rechteckigen Querschnitt auf.

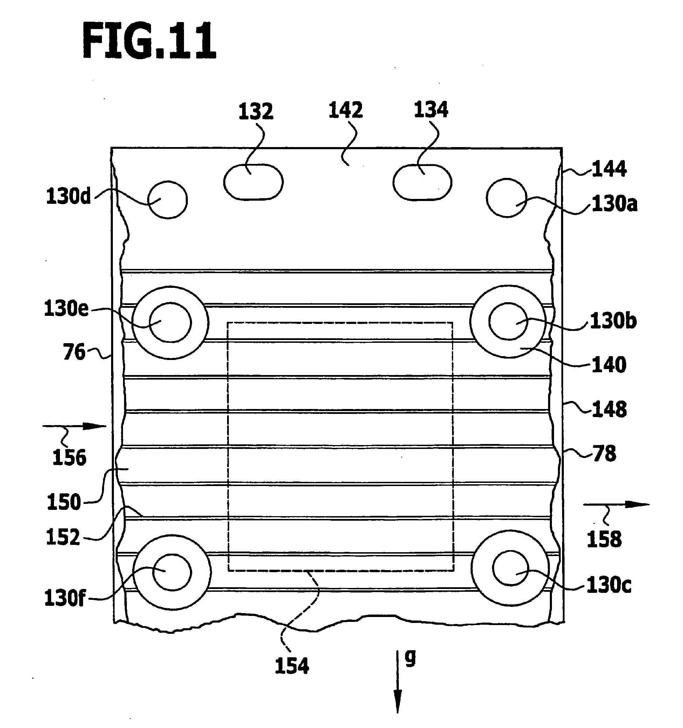

Die Freiräume 74 erstrecken sich durch die ganze Breite der Bipolarplatte 52. An gegenüberliegenden Stirnseiten 76, 78 (vgl. Figur 11) ist die Bipolarplatte 52 offen, das heißt die kanalförmigen Freiräume 74 sind zu den Stirnseiten 76 und 78 jeweils offen.

Die Freiräume 74 erstrecken sich in einer Längsrichtung 80 zwischen den Stirnseiten 76, 78. Diese Längsrichtung 80 liegt quer und insbesondere senkrecht zu den Stirnseiten 76, 78. Die kanalförmigen Freiräume 74 weisen dabei eine einheitliche geradlinige Längsrichtung 80 auf. Die kanalförmigen Freiräume 74 sind dadurch von der Stirnseite 76 zur Stirnseite 78 "durchsichtig".

Die Längsrichtung 80 liegt parallel zu den Außenseiten 56 und 60 der ersten Decklage 54 bzw. der zweiten Decklage 58. Ferner sind die Freiräume 74 mit ihren Längsrichtungen 80 parallel zueinander orientiert.

Die Freiräume 74 sind als Kühlmittelkanäle ausgebildet, durch die sich ein Kühlmittelfluid wie Luft oder eine elektrisch nicht-leitfähige Flüssigkeit durchtransportieren lassen.

Es kann vorgesehen sein, dass die erste Decklage 54 und/oder die zweite Decklage 58 und/oder die Querstege 64 mit einer Schutzbeschichtung versehen sind. Beispielsweise ist eine Korrosionsschutzbeschichtung vorgesehen. Es ist dabei möglich, dass die Schutzbeschichtung so ausgebildet ist, dass die Verbindungsmittelschicht 70 an ihr haften bleibt.

Die Bipolarplatte 52 lässt sich beispielsweise dadurch herstellen, dass die erste Decklage 54 mit der integrierten Stützlage 62 durch Walzen eines Metallblechs wie beispielsweise eines Aluminiumblechs hergestellt wird. Anschließend wird die zweite Decklage 58 mit der Stützlage 62 über die Verbindungsmittelschicht 70 verbunden. Die zweite Decklage 58 wird beispielsweise aus einem Metallblech hergestellt.

Die Freiräume 74, welche aus Kühlmittelkanäle ausgebildet sind, sind gasdicht voneinander getrennt.

Durch die erfindungsgemäße Lösung lässt sich eine Bipolarplatte bereitstellen, welche eine gute elektrische Leitfähigkeit aufweist, so dass benachbarte Brennstoffzellen 12a, 12b, 12c, 12d hintereinander geschaltet werden können. Weiterhin weist sie eine gute thermische Leitfähigkeit auf, so dass Abwärme von den Brennstoffzellen abführbar ist. Durch die Freiräume 74 lässt sich auch eine aktive Kühlung erreichen. Weiterhin lässt sich auf einfache Weise eine Langzeit-Gasdichtigkeit gewährleisten bei hoher mechanischer Stabilität. Die Stützlage 62 stützt die zweite Decklage 58 an der ersten Decklage 54 ab und hält diese beiden Decklagen 54, 58 auf Abstand.

Die Bipolarplatte 52 lässt sich auf kostengünstige Weise in großen Stückzahlen herstellen.

Es lässt sich insgesamt bei hoher thermischer Leitfähigkeit eine hohe spezifische elektrische Übertragungsleistung bei niedriger Temperaturdifferenz im Inneren der Bipolarplatte 52 erreichen. Es lässt sich bei hoher thermischer Querleitfähigkeit die spezifische elektrische und thermische Blockleistung insbesondere bei luftgekühlten Niedertemperatur-Polymerelektrolytmembranbrennstoffzellenblöcken erhöhen.

Es lassen sich Ausgangsmaterialien (insbesondere Metallbleche) einsetzen, welche preiswert erhältlich sind und einfach und kostengünstig verarbeitbar sind. Es lassen sich beispielsweise beschichtete oder unbeschichtete Dünnbleche auf Aluminium-, Magnesium- oder Stahlbasis einsetzen. Es lassen sich Bleche mit vorgefertigter Lotschicht und/oder mit vorgefertigter Korrosionsschutzschicht einsetzen. Funktionelle Beschichtungen wie Korrosionsschutzschichten werden durch das Herstellverfahren nicht beschädigt.

Weiterhin lässt sich die Masse der Bipolarplatte 52 durch die Freiräume 74 gering halten.

Das Volumen der Freiräume 74 im Zwischenbereich 72 zwischen der ersten Decklage 54 und der zweiten Decklage 58 beträgt mindestens 70 % des Gesamtvolumens des Zwischenbereichs 72, das heißt der Volumenbereich der Querstege 64 im Zwischenraum 72 ist kleiner als 30 % des Gesamtvolumens.

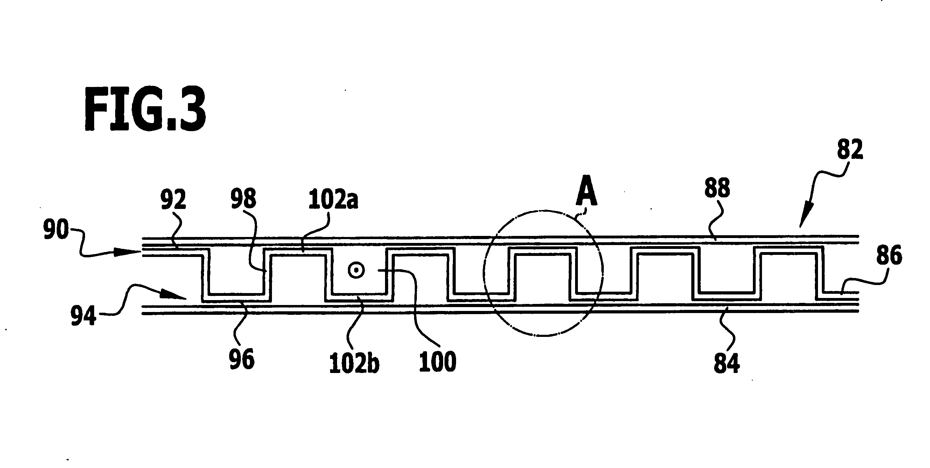

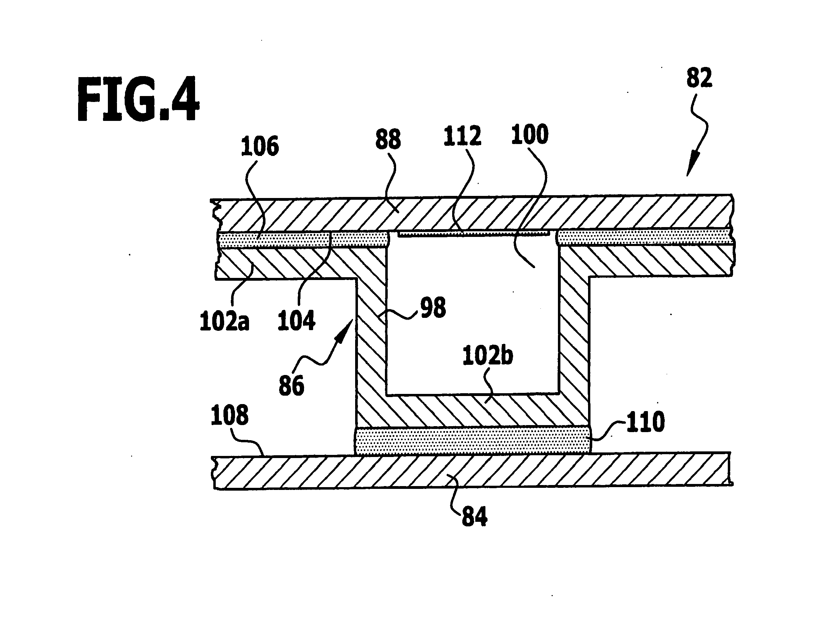

Bei einem zweiten Ausführungsbeispiel einer Bipolarplatte, welches in den Figuren 3 und 4 gezeigt und dort mit 82 bezeichnet ist, ist wiederum eine erste Decklage 84, eine Stützlage 86 und eine zweite Decklage 88 vorgesehen. Die erste Decklage 84, die Stützlage 86 und die zweite Decklage 88 sind jeweils einstückig ausgebildet und aus einem metallischen Material hergestellt.

Die Stützlage 86 ist eine Faltstruktur mit einer ersten Reihe 90 von beabstandeten Anlagebereichen 92 zur Anlage an die zweite Decklage 88 und einer zweiten Reihe 94 von Anlagebereichen 96 zur Anlage an die erste Decklage 84. Die beiden Reihen 90, 94 liegen parallel beabstandet zueinander mit der Beabstandung in einer Höhenrichtung der Bipolarplatte 82 zwischen der ersten Decklage 84 und der zweiten Decklage 88. Die Anlagebereiche 92, 96 sind versetzt zueinander.

Über die Anlagebereiche 92 lässt sich die zweite Decklage 88 mit der Stützlage 86 beispielsweise über Lötung oder Klebung verbinden. Über die Anlagebereiche 96 lässt sich die erste Decklage 84 mit der Stützlage 86 beispielsweise über Lötung oder über Klebung fixieren.

Die Stützlage 86 lässt sich durch Faltung eines Metallblechs herstellen.

Die Stützlage 86 weist Querstege 98 auf, welche quer und insbesondere senkrecht zu den Decklagen 84, 88 orientiert sind. Diese Querstege 98 halten die Decklagen 84 und 88 auf Abstand. Zwischen benachbarten Querstegen sind Freiräume 100 gebildet, welche insbesondere als Kühlmittelkanäle dienen.

Benachbarte Querstege 98 sind über Parallelstege 102a (in der erste Reihe 90) bzw. 102b (in der zweiten Reihe 94) miteinander verbunden. Diese Parallelstege 102a bzw. 102b bilden wiederum die Anlagebereiche 92 bzw. 96 aus.

Zwischen dem Parallelsteg 102a und einer Innenseite 104 der zweiten Decklage 88 ist eine Verbindungsmittelschicht 106 wie beispielsweise eine Lötmittelschicht angeordnet. Auf die gleiche Weise ist zwischen einem Parallelsteg 102b und einer Innenseite 108 der ersten Decklage 84 eine Verbindungsmittelschicht 110 wie beispielsweise eine Lötschicht angeordnet.

Die Verbindung der Decklagen 84 und 88 mit der Stützlage 86 kann beispielsweise über Hartlöten oder Weichlöten in einem Ofen erfolgen. Es ist beispielsweise möglich, dass die Decklagen 84 und 88 nur einseitig (an ihrer jeweiligen Innenseite 108 bzw. 104) mit einer dünnen Lotschicht beschichtet sind. Auf der anderen Seite können beliebige Schutzbeschichtungen aufgetragen sein.

Die Stützlage 86 muss nicht unbedingt mit einer Lotschicht versehen sein. Es genügt eine Vorbereitung zur flächigen Verlötung mit den Decklagen 84, 88.

Es ist beispielsweise möglich, dass die Stützlage eine Korrosionsschutzbeschichtung aufweist. Diese Korrosionsschutzbeschichtung ist insbesondere beidseitig angeordnet. Dadurch lässt sich die Haltbarkeit bezüglich Korrosion durch Kühlmittel erhöhen. Insbesondere ist diese Korrosionsschutzbeschichtung lötbar.

Bei einem Lötvorgang im Ofen ist es günstig, wenn die Decklagen 84, 88 und die Stützlage 86 so eingespannt bzw. beschwert werden, dass ein Verziehen durch den Lötvorgang nicht die Maßhaltigkeit der Bipolarplatte beeinträchtigt.

Überschüssiges Lot muss auch nicht aus der Bipolarplatte entfernt werden, sondern kann, wenn es im Kühlmittel nicht gelöst wird, in der Bipolarplatte verbleiben.

Grundsätzlich ist es auch möglich, dass die Stützlage mit einer beidseitigen Lotbeschichtung versehen wird. Dadurch ist eine Lotbeschichtung der Decklagen 84, 88 nicht mehr notwendig.

Es ist grundsätzlich auch möglich, dass sowohl die Decklagen 84, 88 als auch die Stützlage 86 jeweils lotbeschichtet werden.

In Figur 4 ist schematisch eine Schutzbeschichtung 112 angedeutet. Wie oben erwähnt, kann alternativ oder zusätzlich auch die Stützlage 86 mit einer Schutzbeschichtung versehen sein.

Die einstückig ausgebildete Stützlage 86 ist eine Faltenstruktur mit parallel ausgerichteten Anlagebereichen 92, 96. Die Stützlage ist periodisch und kann beispielsweise durch Faltung bzw. Biegung eines Blechs hergestellt werden.

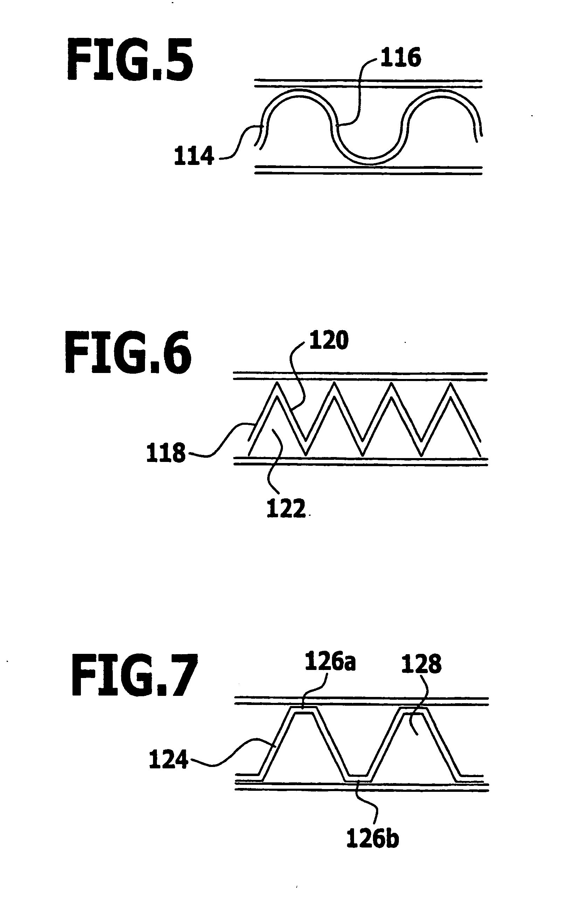

In Figur 5 ist eine Stützlage 114 gezeigt, welche Querstege 116 aufweist. Diese Stützlage 114 ist einstückig ausgebildet und periodisch wellenartig verlaufend. Beispielsweise ist sie sinusförmig.

In Figur 6 ist eine Stützlage 118 mit Querstegen 120 gezeigt, bei welcher Freiräume 122 (und damit Kanäle) einen dreieckförmigen Querschnitt aufweisen.

In Figur 7 ist eine Stützlage 124 gezeigt, welche Querstege 124 aufweist und Parallelstege 126a, 126b. Ein Freiraum 128 hat einen trapezförmigen Querschnitt.

Die Stützlage lässt sich in ihrer Ausgestaltung und insbesondere in ihrer geometrischen Ausgestaltung anpassen, so dass die entsprechende Bipolarplatte optimiert an die Anwendung angepasst ist. Beispielsweise lassen sich über die Ausbildung der Stützlage Variablen wie Wärmeübertragung und Temperaturdifferenz zwischen Wärmequelle und Kühlmittel einstellen. Es kann eine Anpassung an die Kühlmittelart erfolgen und an die Druckfestigkeit von Decklagen. Weiterhin lässt sich die Wärmeübertragungsfläche einstellen. Dies kann über Auswahl des Materials, Materialdicke in einer Stützlage, Faltform bzw. Biegeform und Auswahl der Verbindungsfläche zwischen der Stützlage und Decklagen erreicht werden.

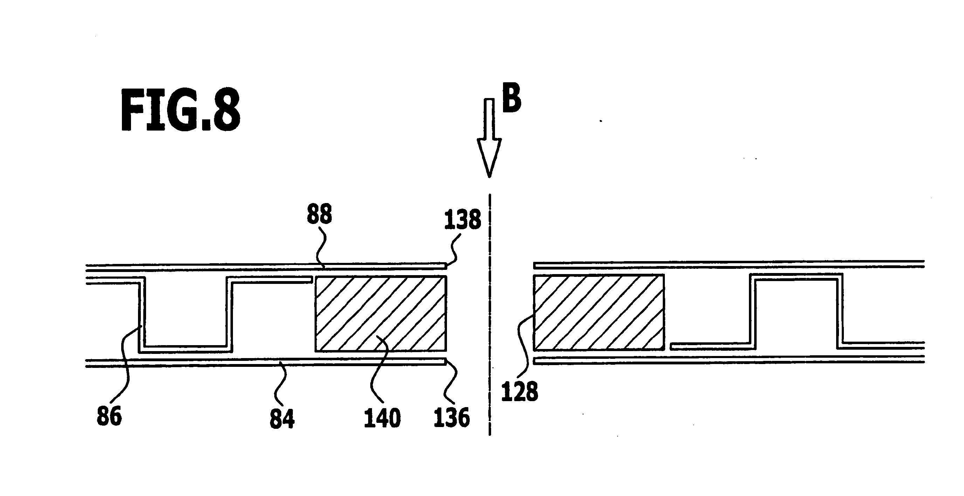

Es kann vorgesehen sein, dass eine Bipolarplatte, beispielsweise die Bipolarplatte 52 mit Durchgangsöffnungen 128 (Figur 8 bis 11) versehen ist. Eine Durchgangsöffnung, welche durch die Decklagen 84, 88 durchgeht, kann dabei als Durchtauchöffnung für ein Spannelement 46 dienen. Solche Durchgangsöffnungen sind Figur 11 mit den Bezugszeichen 130a, 130b, 130c, 130d, 130e, 130f bezeichnet.

Es können auch Durchgangsöffnungen vorgesehen sein, um einen Gaskanal zu bilden. Solche Durchgangsöffnungen sind in Figur 11 mit dem Bezugszeichen 132, 134 bezeichnet. Sie dienen zur Aufnahme von Leitungen 42a, 42b, 42c bzw. 44a, 44b, 44c wie oben anhand des Brennstoffzellenblocks 10 beschrieben bzw. bilden selber Leitungsbereiche aus.

Eine Durchgangsöffnung 128 ist über jeweilige Öffnungen 136 in der ersten Decklage 84 und Öffnung 138 in der zweiten Decklage 88 gebildet, wobei diese Öffnungen 136, 138 durch einen Freiraum, welcher durch die Stützlage 86 hindurchgeht, miteinander materialfrei verbunden sind.

Im Bereich der Durchgangsöffnung 128 ist ein Einlegeelement 140 angeordnet, welches insbesondere aus einem Vollmaterial hergestellt ist und eine Höhe aufweist, welche der Höhe zwischen der ersten Decklage 84 und der zweiten Decklage 88 entspricht. Das Einlegeelement 140 selber weist eine Durchgangsöffnung auf, welche die Verbindung zwischen den Öffnungen 136 und 138 sorgt.

Über das Einlegeelement lassen sich Punktkräfte in die Bipolarplatte flächig einleiten.

Ein solches Einlegeelement 140 ist beispielsweise als dickwandiges Rohrstück mit angepasstem Durchmesser hergestellt. Die Höhe dieses Rohrstücks entspricht dem Abstand zwischen den Decklagen 84 und 88. An dem Ort, an dem ein Einlegeelement 140 eingelegt werden soll, wird ein entsprechender Freiraum in der Stützlage 86 hergestellt, beispielsweise durch Ausstanzen.

Das Einlegeelement 140 ist mit den Decklagen 84 und 88 auf die gleiche Weise verbunden wie diese mit der Stützlage 86 verbunden sind. Beispielsweise ist eine Lotschicht als Verbindungsmittelschicht vorgesehen, welche an gegenüberliegenden Seiten des Einlegeelements 140 sitzt.

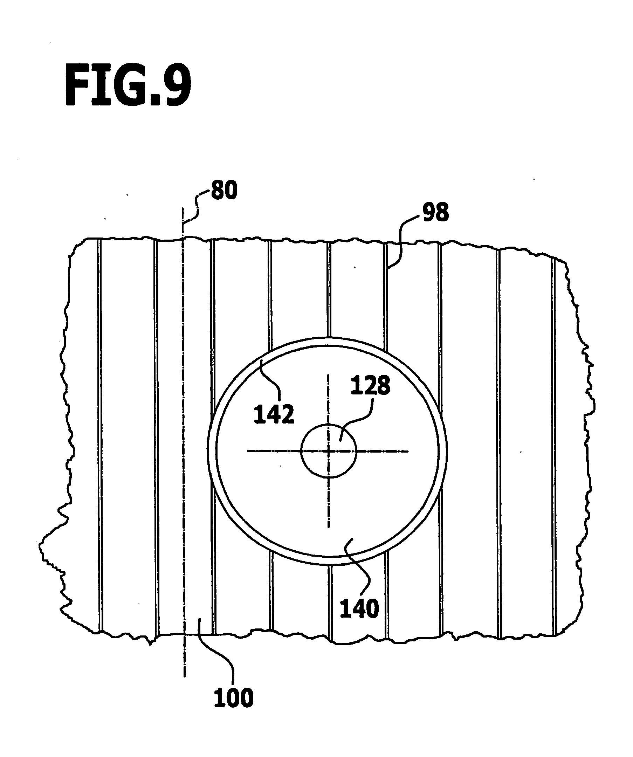

Durch ein Einlegeelement 140 kann grundsätzlich der Kühlmittelfluss durch den entsprechenden Kühlmittelkanal 100 (Freiraum) unterbrochen werden. Es ist vorgesehen, dass Querstege 98 in der Nähe des Einlegeelements 140 so ausgebildet sind, dass eine Umströmung des Einlegeelements 140 möglich ist. Beispielsweise sind Querstege 98 in diesem Bereich "plattgedrückt". Dies ist in Figur 9 durch den Bereich mit den Bezugszeichen 142 angedeutet.

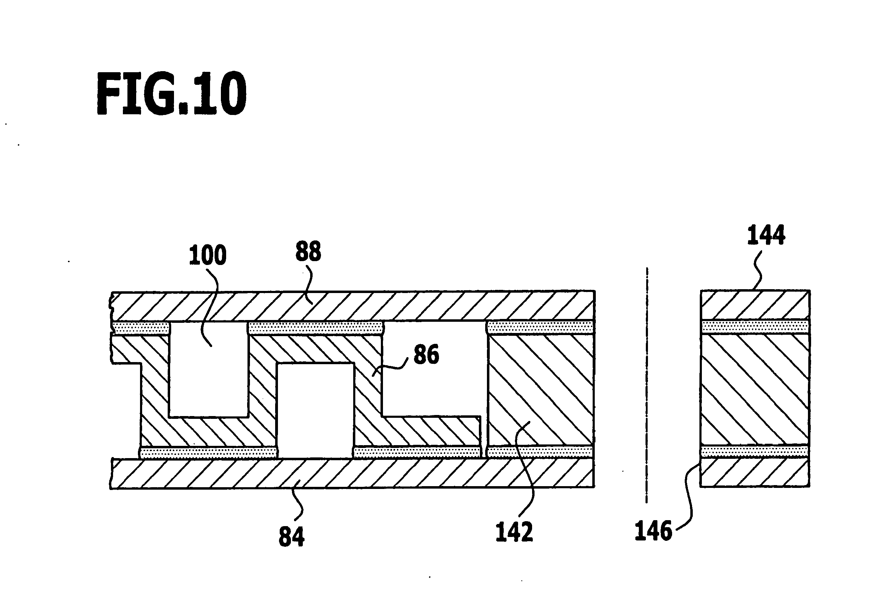

Es ist auch möglich, wie in Figur 10 angedeutet, dass ein Einlegeelement 142 an einem Endbereich 144 der Bipolarplatte angeordnet ist und mittels diesem Einlegeelement 142 eine Durchgangsöffnung 146 gebildet ist. Diese Durchgangsöffnung 146 kann als Durchtauchöffnung für ein Spannelement 46 dienen oder als Gaskanal.

Wenn die Durchgangsöffnung 146 als Gaskanal dient, dann ist für eine gute Abdichtung bezüglich den Freiräumen 100 (Kühlmittelkanäle 100) zu sorgen. Die Durchgangsöffnung 146 kann direkt als Kanalbohrung dienen oder es kann in ihr eine Leitung gelegt werden.

Das Einlegeelement 142 kann einer Dichtung zugeordnet sein oder die entsprechenden Decklagen 84, 88 können im Bereich des Einlegeelements mit einer Dichtung versehen sein.

In Figur 11 ist ein Beispiel einer Bipolarplatte 148 mit wie oben beschriebenen Durchgangsöffnungen 130a bis 130f sowie 132, 134 gezeigt. Zwischen den Stirnseiten 76 und 78 verlaufen die als Kühlmittelkanäle 150 ausgebildeten Freiräume, wobei benachbarte Kühlmittelkanäle durch Querstege 152 fluiddicht voneinander getrennt sind.

Eine aktive Elektrodenfläche ist in Figur 11 mit dem Bezugszeichen 154 gezeigt. Dieser Flächenbereich wird durch die Anode oder Kathode eingenommen, mit der die Bipolarplatte 148 verbunden ist. Die Durchgangsöffnungen 130b, 130c, 130e, 130f liegen außerhalb dieser aktiven Elektrodenfläche 154.

Die Durchgangsöffnungen 130a, 130d sowie 132 und 134 liegen in einem Endbereich 144 in einem beispielsweise plattenförmig ausgebildeten Einlegeelement 142.

Die Durchgangsöffnungen 130b, 130c, 130e, 130f sind von einem Einlegeelement 140 wie oben beschrieben umgeben.

An der Bipolarplatte 148 kann eine Gasverteilungsstruktur angeordnet bzw. gebildet sein, um der entsprechenden Elektrode Brennstoff oder Oxidator zuführen zu können bzw. nicht-verbrauchten Brennstoff bzw. Oxidator abführen zu können. Beispielsweise wird die Gasverteilungsstruktur durch einen Metallschwamm gebildet, welcher über die Bipolarplatte an die entsprechende Elektrode gedrückt wird. Durch dieses Drücken, welches durch Spannelemente 46 bewirkt wird, lässt sich die Gasverteilungsstruktur in eine entsprechende Form bringen.

Es ist grundsätzlich auch möglich, dass eine erfindungsgemäße Bipolarplatte als Kühlelement zwischen Bipolarplatten von Brennstoffzellen gebracht wird.

Es kann vorgesehen sein, wie beispielsweise in Figur 11 schematisch gezeigt, dass die Kühlmittelkanäle 150 horizontal ausgerichtet sind, das heißt senkrecht zur Schwerkraftrichtung orientiert sind.

In die Kühlmittelkanäle 150 lässt sich insbesondere Luft als Kühlmittel einkoppeln. Die Einkopplung ist durch den Pfeil mit dem Bezugszeichen 156 angedeutet. (Erwärmte) Kühlluft lässt sich gegenüberliegend an der Stirnseite 78 auskoppeln. Dies ist durch den Pfeil mit dem Bezugszeichen 158 angedeutet. Bei horizontaler Ausrichtung der Kühlmittelkanäle 150 durchströmt die Kühlluft die Bipolarplatte 148 horizontal. Der Eintritt des Kühlmittels in die Kühlmittelkanäle 150 erfolgt insbesondere an derjenigen Seite der Bipolarplatte 148 (in Figur 11 an der Stirnseite 76), an welcher sich ein Auslass für das heißeste Medium befindet. Üblicherweise ist dies der Oxidator-Auslass, an dem Restluft, welche sauerstoffverarmt ist und Wasserdampf enthält, austritt. Üblicherweise wird eine Brennstoffzelle auch von Brennstoff und Oxidator in im wesentlichen vertikaler Richtung von oben nach unten durchströmt. (In Figur 1 werden die Brennstoffzellen 12a und 12c von unten nach oben durchströmt.)

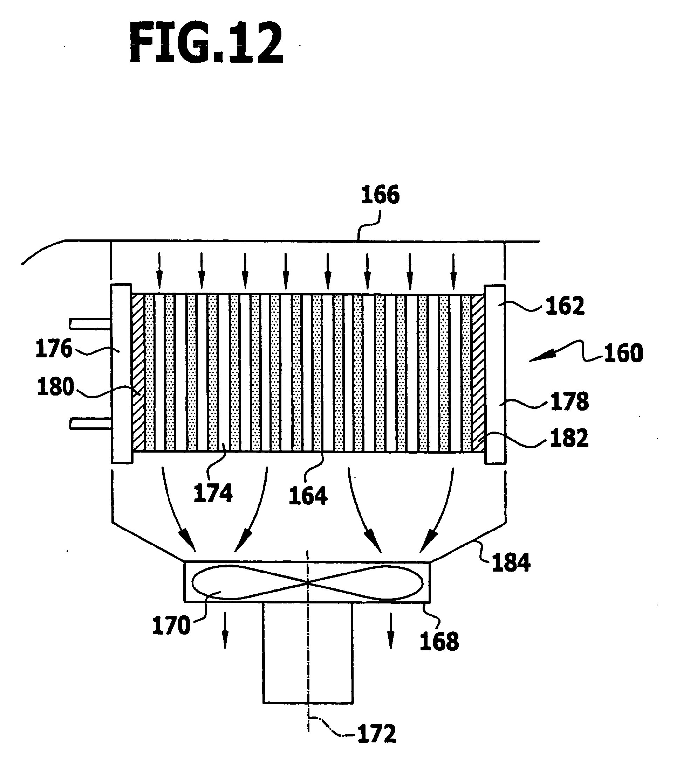

Erfindungsgemäß wird eine Brennstoffzellenblock-Anordnung 160 (Figur 12) bereitgestellt, welche einen Brennstoffzellenblock 162 mit einer oder mehreren erfindungsgemäßen Bipolarplatten 164 zwischen benachbarten Brennstoffzellen umfasst.

Der Brennstoffzellenblock 162 ist zwischen einem Kühlergrill 166 und einem Ventilator 168 angeordnet. Der Kühlergrill 166 weist Öffnungen auf, über die Kühlluft ansaugbar ist.

Der Ventilator 168 weist einen Rotor 170 auf, welcher um eine Rotorachse 172 rotierbar ist.

Die mindestens eine Bipolarplatte 164 ist zwischen dem Kühlergrill 166 und dem Ventilator 168 angeordnet, und zwar derart, dass von dem Ventilator 168 angesaugte Kühlluft die Kühlmittelkanäle 174 der Bipolarplatte 164 durchströmt.

Die Kühlmittelkanäle 174 sind dabei mit ihrer Längsachse im wesentlichen parallel zu der Rotorachse 172 des Ventilators 168 ausgerichtet.

Durch den Ventilator angesaugte Kühlluft trägt also zur Kühlung des Brennstoffzellenblocks 160 über Durchströmung der Bipolarplatte 164 bei. Dadurch lassen sich die elektrochemischen Elektroden des Brennstoffzellenblocks 162 kühlen.

Der Brennstoffzellenblock 162 weist gegenüberliegende Endplatten 176, 178 auf, zwischen welchen die Brennstoffzellen des Brennstoffblocks 162 beispielsweise über Spannstangen eingespannt sind. Zwischen den Endplatten 176, 178 und benachbarten Brennstoffzellen können Isolierplatten 180, 182 vorgesehen sein.

Zwischen dem Brennstoffzellenblock 162 und dem Ventilator 168 kann eine Abdeckung 184 vorgesehen sein, welche zur Luftführung dient. Dadurch lässt sich insbesondere sicherstellen, dass Kühlluft durch die mindestens eine Bipolarplatte 164 durchgezogen wird.

Bei der erfindungsgemäßen Lösung lässt sich über die erfindungsgemäße Bipolarplatte mit durchgängig hohlem Innenraum (über die Freiräume) eine direkte Kühlung von Elektrodenflächen einer Brennstoffzelle 12a, 12b, 12c, 12d direkt am Ort der Entstehung der Abwärme erreichen. Durch diese Direktkühlung der aktiven Brennstoffzellenfläche kann die Betriebsstromdichte auf einfache Weise erhöht werden. Insbesondere lässt sich die Betriebsstromdichte um einen Faktor 2 bis 3 im Vergleich zu indirekten Kühlverfahren erhöhen.

## Patentansprüche

1. Bipolarplatte für elektrochemische Anwendungen, umfassend eine erste Decklage (54; 84) aus einem metallischen Material, eine zweite Decklage (58; 88) aus einem metallischen Material, und eine Stützlage (62; 86) aus einem metallischen Material, welche zwischen der ersten Decklage (54; 84) und der zweiten Decklage (58; 88) angeordnet ist und mit der ersten Decklage (54; 84) und der zweiten Decklage (58; 88) verbunden ist, wobei die Stützlage (62; 86) mindestens eine Reihe (90; 94) an Anlagebereichen (68; 92; 96) für die erste Decklage (54; 84) und/oder die zweite Decklage (58; 88) aufweist und zwischen benachbarten Anlagebereichen (68; 92; 96) Freiräume (74; 100) gebildet sind, **dadurch gekennzeichnet , dass** mindestens eine Durchgangsöffnung (128) zur Führung von Brennstoff und/oder Oxidator vorgesehen ist und dass im Bereich der mindestens einen Durchgangsöffnung (128) zwischen der ersten Decklage und der zweiten Decklage ein Einlegeelement (140; 142) angeordnet ist, über welches sich Punktkräfte flächig einleiten lassen.

2. Bipolarplatte nach Anspruch 1, **dadurch gekennzeichnet, dass** sich die Freiräume (74; 100) zwischen der ersten Decklage (54; 84) und der zweiten Decklage (58; 88) erstrecken und/oder zwischen einer Decklage (84; 88) und einem Anlagebereich (92; 96) der Stützstruktur (86) an die andere Decklage (88; 84) erstrecken.

3. Bipolarplatte nach Anspruch 1 oder 2, **dadurch gekennzeichnet, dass** die Freiräume (74; 100) im wesentlichen parallel zueinander ausgerichtet sind.

4. Bipolarplatte nach einem der vorangehenden Ansprüche, **dadurch gekennzeichnet, dass** sich die Freiräume (74; 100) zwischen einer ersten Stirnseite (76) der Bipolarplatte und einer gegenüberliegenden zweiten Stirnseite (78) der Bipolarplatte erstrecken.

5. Bipolarplatte nach Anspruch 4, **dadurch gekennzeichnet, dass** die Freiräume (74; 100) zu den Stirnseiten (76; 78) offen sind.

6. Bipolarplatte nach einem der vorangehenden Ansprüche, **dadurch gekennzeichnet, dass** die Freiräume (74; 100) jeweils eine Längsachse (80) aufweisen, welche im wesentlichen geradlinig ist.

7. Bipolarplatte nach einem der vorangehenden Ansprüche, **dadurch gekennzeichnet, dass** die Freiräume (74; 100) jeweils eine Längsachse (80) aufweisen, welche im wesentlichen parallel zur ersten Decklage (54; 84) ist.

8. Bipolarplatte nach einem der vorangehenden Ansprüche, **dadurch gekennzeichnet, dass** die Freiräume (74; 100) jeweils eine Längsachse (80) aufweisen, welche im wesentlichen parallel zur zweiten Decklage (58; 88) ist.

9. Bipolarplatte nach einem der vorangehenden Ansprüche, **dadurch gekennzeichnet, dass** die Freiräume (74; 100) jeweils eine Längsachse (80) aufweisen, welche quer zu einer Stirnseite (76; 78) der Bipolarplatte ist.

10. Bipolarplatte nach Anspruch 9, **dadurch gekennzeichnet, dass** die jeweilige Längsachse (80) im wesentlichen senkrecht zu der Stirnseite (76; 78) ist.

11. Bipolarplatte nach einem der vorangehenden Ansprüche, **dadurch gekennzeichnet, dass** mindestens 70 % des Volumenbereichs zwischen der ersten Decklage (54; 84) und der zweiten Decklage (58; 88) durch Freiräume (74; 100) eingenommen ist.

12. Bipolarplatte nach einem der vorangehenden Ansprüche, **dadurch gekennzeichnet, dass b**enachbarte Freiräume (74; 100) fluiddicht voneinander getrennt sind.

13. Bipolarplatte nach einem der vorangehenden Ansprüche, **dadurch gekennzeichnet, dass** die Stützlage (62; 86) Stege (64; 98) aufweist, welche quer zu der ersten Decklage (54; 84) und quer zur zweiten Decklage (58; 88) orientiert sind.

14. Bipolarplatte nach einem der vorangehenden Ansprüche, **dadurch gekennzeichnet, dass** die Freiräume (74; 100) jeweils im wesentlichen den gleichen Querschnitt aufweisen.

15. Bipolarplatte nach einem der vorangehenden Ansprüche, **dadurch gekennzeichnet, dass** die Stützlage (62; 86) eine periodische Struktur hat.

16. Bipolarplatte nach einem der vorangehenden Ansprüche, **dadurch gekennzeichnet, dass** die Freiräume (74; 100) als Kühlmittelkanäle ausgebildet sind.

17. Bipolarplatte nach einem der vorangehenden Ansprüche, **dadurch gekennzeichnet, dass** die Anlagebereiche (68; 92; 96) der mindestens einen Reihe (90; 94) an Anlagebereichen im wesentlichen in einer Ebene liegen.

18. Bipolarplatte nach einem der vorangehenden Ansprüche, **dadurch gekennzeichnet, dass** zwischen Anlagebereichen (68; 92; 96) der Stützlage (62; 86) und der ersten Decklage (54; 84) und/oder der zweiten Decklage (58; 88) eine Verbindungsmittelschicht (70; 106) angeordnet ist.

19. Bipolarplatte nach Anspruch 18, **dadurch gekennzeichnet, dass** die Verbindungsmitteischicht (70; 106) eine Lötschicht oder Klebemittelschicht aus elektrisch leitfähigem Klebemittel ist.

20. Bipolarplatte nach einem der vorangehenden Ansprüche, **dadurch gekennzeichnet, dass** die erste Decklage (84) und/oder die zweite Decklage (58; 88) einstückig ausgebildet sind.

21. Bipolarplatte nach einem der vorangehenden Ansprüche, **dadurch gekennzeichnet, dass** die Stützlage (86) einstückig ausgebildet ist.

22. Bipolarplatte nach einem der Ansprüche 1 bis 21, **dadurch gekennzeichnet, dass** die Stützlage (86) einstückig entweder mit der ersten Decklage (54) oder der zweiten Decklage (58) verbunden ist.

23. Bipolarplatte nach Anspruch 22, **dadurch gekennzeichnet, dass** die erste Decklage (54) und die Stützlage (86) aus einem gewalzten Metallblech hergestellt sind.

24. Bipolarplatte nach einem der vorangehenden Ansprüche, **dadurch gekennzeichnet, dass** die erste Stützlage (86) eine Faltstruktur oder Wellenstruktur ist.

25. Bipolarplatte nach einem der vorangehenden Ansprüche, **dadurch gekennzeichnet, dass** die erste Decklage (54; 84) und die zweite Decklage (58; 88) gasdicht ausgebildet sind.

26. Bipolarplatte nach einem der vorangehenden Ansprüche, **dadurch gekennzeichnet, dass** an der ersten Decklage (54; 84) und/oder der zweiten Decklage (58; 88) und/oder der Stützlage (62; 86) eine Schutzbeschichtung (112) angeordnet ist.

27. Bipolarplatte nach einem der vorangehenden Ansprüche, **dadurch gekennzeichnet, dass** mindestens eine Durchgangsöffnung (128) für ein Spannelement (46) vorgesehen ist.

28. Bipolarplatte nach einem der vorangehenden Ansprüche, **dadurch gekennzeichnet, dass** das Einlegeelement (140; 142) ein Vollmaterialelement ist.

29. Bipolarplatte nach einem der vorangehenden Ansprüche, **dadurch gekennzeichnet, dass** das Einlegeelement (140; 142) mit der ersten Decklage (54; 84) und/oder der zweiten Decklage (58; 88) verbunden ist.

30. Bipolarplatte nach einem der vorangehenden Ansprüche, **dadurch gekennzeichnet, dass** in der Nähe eines Einlegeelements (140) die Stützlage (62; 86) so ausgebildet ist, dass eine Umströmung des Einlegeelements (140) von in Freiräumen (74; 100) strömendem Fluid ermöglicht ist.

31. Bipolarplatte nach einem der vorangehenden Ansprüche, **dadurch gekennzeichnet, dass** die mindestens eine Durchgangsöffnung (128) bezüglich Freiräumen abgedichtet ist.

32. Verfahren zur Herstellung einer Bipolarplatte, bei dem eine erste Decklage aus einem metallischen Material hergestellt wird, eine Stützlage aus einem metallischen Material mit Querstegen und zwischen benachbarten Querstegen liegenden Freiräumen hergestellt wird, eine zweite Decklage aus einem metallischen Material hergestellt wird, und die erste Decklage und die zweite Decklage über die Stützlage miteinander verbunden werden, **dadurch gekennzeichnet, dass** mindestens eine Durchgangsöffnung in der Bipolarplatte hergestellt wird und dass im Bereich der Durchgangsöffnung ein Einlegeelement aus Vollmaterial eingelegt wird.

33. Verfahren nach Anspruch 32, **dadurch gekennzeichnet, dass** die zweite Decklage mit der Stützlage verbunden wird.

34. Verfahren nach Anspruch 33, **dadurch gekennzeichnet, dass** die zweite Decklage mit der Stützlage über Lötung oder Klebung verbunden wird.

35. Verfahren nach einem der Ansprüche 32 bis 34, **dadurch gekennzeichnet, dass** die erste Decklage mit der Stützlage über Lötung oder Klebung verbunden wird.

36. Verfahren nach einem der Ansprüche 32 bis 35, **dadurch gekennzeichnet, dass** die erste Decklage und die Stützlage integral hergestellt werden.

37. Verfahren nach Anspruch 36, **dadurch gekennzeichnet, dass** die erste Decklage und die Stützlage integral durch Walzung eines Metallblechs hergestellt werden.

38. Verfahren nach einem der Ansprüche 32 bis 37, **dadurch gekennzeichnet, dass** die erste Decklage und/oder die zweite Decklage aus einem Metallblech hergestellt werden.

39. Verfahren nach einem der Ansprüche 32 bis 38, **dadurch gekennzeichnet, dass** als Ausgangsmaterial für die erste Decklage und/oder die zweite Decklage und/oder die Stützlage ein mit einer Schutzbeschichtung versehenes Metallblech verwendet wird.

40. Verfahren nach einem der Ansprüche 32 bis 39, **dadurch gekennzeichnet, dass** auf der Bipolarplatte eine Gasverteilungsstruktur hergestellt wird oder angeordnet wird.

41. Verfahren nach Anspruch 40, **dadurch gekennzeichnet, dass** die Gasverteilungsstruktur durch Anlegen einer Schwammstruktur hergestellt wird.

42. Brennstoffzellenblock-Anordnung, umfassend einen Brennstoffzellen-Block (162), wobei zwischen mindestens einer ersten Brennstoffzelle und einer zweiten Brennstoffzelle eine Bipolarplatte (164) gemäß einem der Ansprüche 1 bis 31 angeordnet ist.

43. Brennstoffzellenblock-Anordnung nach Anspruch 42, **dadurch gekennzeichnet, dass** die mindestens eine Bipolarplatte (164) so angeordnet ist, dass Kühlmittelkanäle im wesentlichen horizontal liegen.

44. Brennstoffzellenblock-Anordnung nach Anspruch 42 oder 43, **dadurch gekennzeichnet, dass** eine Brennstoffzelle so angeordnet und ausgebildet ist, dass Brennstoff und Oxidator in im wesentlichen vertikaler Richtung die Brennstoffzelle durchströmen können.

45. Brennstoffzellenblock-Anordnung nach einem der Ansprüche 42 bis 44, **dadurch gekennzeichnet, dass** ein Kühlmitteleintritt in Kühlmittelkanäle der Bipolarplatte (164) an derjenigen Seite liegt, an welcher das heißeste Medium austritt.

46. Brennstoffzellenblock-Anordnung nach Anspruch 45, **dadurch gekennzeichnet, dass** der Austritt für das heißeste Medium ein Luftaustritt ist.

47. Brennstoffzellenblock-Anordnung nach einem der Ansprüche 42 bis 46, **dadurch gekennzeichnet, dass** die mindestens eine Bipolarplatte (164) mit einer offenen Stirnseite einem Kühlergrill (166) zugewandt ist.

48. Brennstoffzellenblock-Anordnung nach einem der Ansprüche 42 bis 47, **dadurch gekennzeichnet, dass** die mindestens eine Bipolarplatte (164) mit einer offenen Stirnseite einem Ventilator (168) zugewandt angeordnet ist.

49. Brennstoffzellenblock-Anordnung nach einem der Ansprüche 42 bis 48, **dadurch gekennzeichnet, dass** die mindestens eine Bipolarplatte (164) zwischen einem Kühlergrill (166) und einem Ventilator (168) angeordnet ist.

50. Brennstoffzellenblock-Anordnung nach Anspruch 49, **dadurch gekennzeichnet, dass** zwischen dem Brennstoffzellenblock (162) und dem Ventilator (168) eine Abdeckung (184) zur Kühlluftführung angeordnet ist.

## Claims

1. A bipolar plate for electro-chemical applications, comprising a first covering layer (54; 84) of a metallic material, a second covering layer (58; 88) of a metallic material, and a supporting layer (62; 86) of a metallic material which is arranged between the first covering layer (54; 84) and the second covering layer (58; 88) and is connected to the first covering layer (54; 84) and the second covering layer (58; 88), wherein the supporting layer (62; 86) comprises at least one row (90; 94) of contact areas (68; 92; 96) for the first covering layer (54; 84) and/or the second covering layer (58; 88) and free spaces (74; 100) are formed between neighbouring contact areas (68; 92; 96), **characterised in that** at least one passage opening (128) is provided for conveying fuel and/or oxidizer and **in that** an insert element (140; 142) by means of which point forces can be introduced over an area is arranged between the first covering layer and the second covering layer in the region of the at least one passage opening (128).

2. A bipolar plate in accordance with Claim 1, **characterised in that** the free spaces (74; 100) extend between the first covering layer (54; 84) and the second covering layer (58; 88) and/or extend between a covering layer (84; 88) and a contact area (92; 96) of the supporting structure (86) on the other covering layer (88; 84).

3. A bipolar plate in accordance with Claim 1 or 2, **characterised in that** the free spaces (74; 100) are aligned substantially in parallel with one another.

4. A bipolar plate in accordance with any of the preceding Claims, **characterised in that** the free spaces (74; 100) extend between a first end face (76) of the bipolar plate and an oppositely located second end face (78) of the bipolar plate.

5. A bipolar plate in accordance with Claim 4, **characterised in that** the free spaces (74; 100) are open at the end faces (76; 78).

6. A bipolar plate in accordance with any of the preceding Claims, **characterised in that** the free spaces (74; 100) each have a longitudinal axis (80) which is substantially a straight-line.

7. A bipolar plate in accordance with any of the preceding Claims, **characterised in that** the free spaces (74; 100) each have a longitudinal axis (80) which is substantially parallel to the first covering layer (54; 84).

8. A bipolar plate in accordance with any of the preceding Claims, **characterised in that** the free spaces (74; 100) each have a longitudinal axis (80) which is substantially parallel to the second covering layer (58; 88).

9. A bipolar plate in accordance with any of the preceding Claims, **characterised in that** the free spaces (74; 100) each have a longitudinal axis (80) which is transverse to an end face (76; 78) of the bipolar plate.

10. A bipolar plate in accordance with Claim 9, **characterised in that** the respective longitudinal axis (80) is substantially perpendicularly to the end face (76; 78).

11. A bipolar plate in accordance with any of the preceding Claims, **characterised in that** at least 70 % of the spatial volume between the first covering layer (54; 84) and the second covering layer (58; 88) is occupied by free spaces (74; 100).

12. A bipolar plate in accordance with any of the preceding Claims, **characterised in that** neighbouring free spaces (74; 100) are separated from each other in fluid-tight manner.

13. A bipolar plate in accordance with any of the preceding Claims, **characterised in that** the supporting layer (62; 86) comprises webs (64; 98) which are oriented transversely relative to the first covering layer (54; 84) and transversely relative to the second covering layer (58; 88).

14. A bipolar plate in accordance with any of the preceding Claims, **characterised in that** the free spaces (74; 100) are each of substantially the same cross section.

15. A bipolar plate in accordance with any of the preceding Claims, **characterised in that** the supporting layer (62; 86) has a periodic structure.

16. A bipolar plate in accordance with any of the preceding Claims, **characterised in that** the free spaces (74; 100) are formed as coolant channels.

17. A bipolar plate in accordance with any of the preceding Claims, **characterised in that** the contact areas (68; 92; 96) of the at least one row (90; 94) of contact areas lie substantially in a plane.

18. A bipolar plate in accordance with any of the preceding Claims, **characterised in that** a connecting medium layer (70; 106) is arranged between contact areas (68; 92; 96) of the supporting layer (62; 86) and the first covering layer (54; 84) and/or the second covering layer (58; 88).

19. A bipolar plate in accordance with Claim 18, **characterised in that** the connecting medium layer (70; 106) is a solder layer or an adhesive layer consisting of an electrically conductive adhesive.

20. A bipolar plate in accordance with any of the preceding Claims, **characterised in that** the first covering layer (84) and/or the second covering layer (58; 88) are formed in one piece.

21. A bipolar plate in accordance with any of the preceding Claims, **characterised in that** the supporting layer (86) is formed in one piece.

22. A bipolar plate in accordance with any of the Claims 1 to 21, **characterised in that** the supporting layer (86) is connected in one piece manner to either the first covering layer (54) or the second covering layer (58).

23. A bipolar plate in accordance with Claim 22, **characterised in that** the first covering layer (54) and the supporting layer (86) are produced from a rolled metal sheet.

24. A bipolar plate in accordance with any of the preceding Claims, **characterised in that** the first supporting layer (86) is a folded structure or a wave-like structure.

25. A bipolar plate in accordance with any of the preceding Claims, **characterised in that** the first covering layer (54; 84) and the second covering layer (58; 88) are formed such as to be gas-tight.

26. A bipolar plate in accordance with any of the preceding Claims, **characterised in that** a protective coating (112) is arranged on the first covering layer (54; 84) and/or on the second covering layer (58; 88) and/or on the supporting layer (62; 86).

27. A bipolar plate in accordance with any of the preceding Claims, **characterised in that** at least one passage opening (128) is provided for a clamping element (46).

28. A bipolar plate in accordance with any of the preceding Claims, **characterised in that** the insert element (140; 142) is a solid material element.

29. A bipolar plate in accordance with any of the preceding Claims, **characterised in that** the insert element (140; 142) is connected to the first covering layer (54; 84) and/or the second covering layer (58; 88).

30. A bipolar plate in accordance with any of the preceding Claims, **characterised in that** the supporting layer (62; 86) is formed in the proximity of an insert element (140) in such a way as to enable fluid flowing in the free spaces (74; 100) to flow past the insert element (140).

31. A bipolar plate in accordance with any of the preceding Claims, **characterised in that** the at least one passage opening (128) is sealed with respect to the free spaces.

32. A method for the production of a bipolar plate, wherein a first covering layer is produced from a metallic material, a supporting layer is produced from a metallic material with transverse webs and free spaces located between neighbouring transverse webs, a second covering layer is produced from a metallic material, and the first covering layer and the second covering layer are connected together by the supporting layer, **characterised in that** at least one passage opening is produced in the bipolar plate, and **in that** an insert element made of solid material is inserted in the region of the passage opening.

33. A method in accordance with Claim 32, **characterised in that** the second covering layer is connected to the supporting layer.

34. A method in accordance with Claim 33, **characterised in that** the second covering layer is connected to the supporting layer by soldering or adhesion.

35. A method in accordance with any of the Claims 32 to 34, **characterised in that** the first covering layer is connected to the supporting layer by soldering or adhesion.

36. A method in accordance with any of the Claims 32 to 35, **characterised in that** the first covering layer and the supporting layer are produced integrally.

37. A method in accordance with Claim 36, **characterised in that** the first covering layer and the supporting layer are produced integrally by rolling a metal sheet.

38. A method in accordance with any of the Claims 32 to 37, **characterised in that** the first covering layer and/or the second covering layer are produced from a metal sheet.

39. A method in accordance with any of the Claims 32 to 38, **characterised in that** a metal sheet provided with a protective coating is used as the starting material for the first covering layer and/or the second covering layer and/or the supporting layer.

40. A method in accordance with any of the Claims 32 to 39, **characterised in that** a gas distribution structure is produced or is arranged on the bipolar plate.

41. A method in accordance with Claim 40, **characterised in that** the gas distribution structure is produced by the application of a sponge-like structure.

42. A fuel cell block arrangement, comprising a fuel cell block (162) wherein a bipolar plate (164) in accordance with any of the Claims 1 to 31 is arranged between at least a first fuel cell and a second fuel cell.

43. A fuel cell block arrangement in accordance with Claim 42, **characterised in that** the at least one bipolar plate (164) is arranged in such a way that the coolant channels lie substantially horizontally.

44. A fuel cell block arrangement in accordance with Claim 42 or 43, **characterised in that** a fuel cell is arranged and formed in such a way that fuel and oxidizer can flow through the fuel cell in a substantially vertical direction.

45. A fuel cell block arrangement in accordance with any of the Claims 42 to 44, **characterised in that** a coolant inlet into the coolant channels of the bipolar plate (164) is located at that side at which the hottest medium emerges.

46. A fuel cell block arrangement in accordance with Claim 45, **characterised in that** the outlet for the hottest medium is an air outlet.

47. A fuel cell block arrangement in accordance with any of the Claims 42 to 46, **characterised in that a**n open end face of the at least one bipolar plate (164) faces a radiator grille (166).

48. A fuel cell block arrangement in accordance with any of the Claims 42 to 47, **characterised in that** an open end face of the at least one bipolar plate (164) faces a fan (168).

49. A fuel cell block arrangement in accordance with any of the Claims 42 to 48, **characterised in that** the at least one bipolar plate (164) is arranged between a radiator grille (166) and a fan (168).

50. A fuel cell block arrangement in accordance with Claim 49, **characterised in that** a cover member (184) is arranged between the fuel cell block (162) and the fan (168) for guiding cooling air.

## Revendications

1. Plaque bipolaire pour applications électrochimiques, comprenant une première couche de recouvrement (54 ; 84) d'un matériau métallique, une deuxième couche de recouvrement (58 ; 88) d'un matériau métallique et une couche de support (62 ; 86) d'un matériau métallique, qui est disposée entre la première couche de recouvrement (54 ; 84) et la deuxième couche de recouvrement (58 ; 88) et est reliée à la première couche de recouvrement (54 ; 84) et à la deuxième couche de recouvrement (58 ; 88), dans laquelle la couche de support (62 ; 86) présente au moins une rangée (90 ; 94) de zones d'appui (68 ; 92 ; 96) pour la première couche de recouvrement (54 ; 84) et/ou la deuxième couche de recouvrement (58 ; 88), et entre des zones d'appui adjacentes (68 ; 92 ; 96), des espaces libres (74 ; 100) sont formés, **caractérisée en ce qu'**au moins une ouverture de passage (128) pour conduire un combustible et/ou oxydant est prévue, et **en ce que** dans la zone de ladite au moins une ouverture de passage (128) entre la première couche de recouvrement et la deuxième couche de recouvrement, un élément d'insertion (140 ; 142) est disposé par lequel des forces ponctuelles peuvent être introduites sur toute la surface.

2. Plaque bipolaire selon la revendication 1,
**caractérisée en ce que** les espaces libres (74 ; 100) s'étendent entre la première couche de recouvrement (54 ; 84) et la deuxième couche de recouvrement (58 ; 88) et/ou entre une couche de recouvrement (84 ; 88) et une zone d'appui (92 ; 96) de la structure de support (86) contre l'autre couche de recouvrement (88 ; 84).

3. Plaque bipolaire selon la revendication 1 ou 2, **caractérisée en ce que** les espaces libres (74 ; 100) sont alignés de façon substantiellement parallèle les uns aux autres.

4. Plaque bipolaire selon l'une quelconque des revendications précédentes, **caractérisée en ce que** les espaces libres (74 ; 100) s'étendent entre une première face frontale (76) de la plaque bipolaire et une deuxième face frontale opposée (78) de la plaque bipolaire.

5. Plaque bipolaire selon la revendication 4, **caractérisée en ce que** les espaces libres (74 ; 100) sont ouverts en direction des faces frontales (76 ; 78).

6. Plaque bipolaire selon l'une quelconque des revendications précédentes, **caractérisée en ce que** les espaces libres (74 ; 100) présentent respectivement un axe longitudinal (80) qui est substantiellement rectiligne.

7. Plaque bipolaire selon l'une quelconque des revendications précédentes, **caractérisée en ce que** les espaces libres (74 ; 100) présentent respectivement un axe longitudinal (80) qui est substantiellement parallèle à la première couche de recouvrement (54 ; 84).

8. Plaque bipolaire selon l'une quelconque des revendications précédentes, **caractérisée en ce que** les espaces libres (74 ; 100) présentent respectivement un axe longitudinal (80) qui est substantiellement parallèle à la deuxième couche de recouvrement (58 ; 88).

9. Plaque bipolaire selon l'une quelconque des revendications précédentes, **caractérisée en ce que** les espaces libres (74 ; 100) présentent respectivement un axe longitudinal (80) qui est transversal à une face frontale (76 ; 78) de la plaque bipolaire.

10. Plaque bipolaire selon la revendication 9,
**caractérisée en ce que** l'axe longitudinal respectif (80) est substantiellement vertical à la face frontale (76 ; 78).

11. Plaque bipolaire selon l'une quelconque des revendications précédentes, **caractérisée en ce qu'**au moins 70 % de la zone de volume entre la première couche de recouvrement (54 ; 84) et la deuxième couche de recouvrement (58 ; 88) sont occupés par des espaces libres (74 ; 100).

12. Plaque bipolaire selon l'une quelconque des revendications précédentes, **caractérisée en ce que** des espaces libres adjacents (74 ; 100) sont séparés les uns des autres de façon étanche au fluide.

13. Plaque bipolaire selon l'une quelconque des revendications précédentes, **caractérisée en ce que** la couche de support (62 ; 86) présente des entretoises (64 ; 98) qui sont orientées transversalement à la première couche de recouvrement (54 ; 84) et transversalement à la deuxième couche de recouvrement (58 ; 88).

14. Plaque bipolaire selon l'une quelconque des revendications précédentes, **caractérisée en ce que** les espaces libres (74 ; 100) présentent respectivement une section transversale substantiellement identique.

15. Plaque bipolaire selon l'une quelconque des revendications précédentes, **caractérisée en ce que** la couche de support (62 ; 86) présente une structure périodique.

16. Plaque bipolaire selon l'une quelconque des revendications précédentes, **caractérisée en ce que** les espaces libres (74 ; 100) sont réalisés comme des canaux pour produit réfrigérant.

17. Plaque bipolaire selon l'une quelconque des revendications précédentes, **caractérisée en ce que** les zones d'appui (68 ; 92 ; 96) de ladite au moins une rangée (90 ; 94) se trouvent au niveau de zones d'appui substantiellement dans un seul plan.

18. Plaque bipolaire selon l'une quelconque des revendications précédentes, **caractérisée en ce qu'**entre des zones d'appui (68 ; 92 ; 96) de la couche de support (62 ; 86) et la première couche de recouvrement (54 ; 84) et/ou la deuxième couche de recouvrement (58 ; 88), une couche de moyens de liaison (70 ; 106) est disposée.

19. Plaque bipolaire selon la revendication 18, **caractérisée en ce que** la couche de moyens de liaison (70 ; 106) est une couche de brasage ou une couche d'adhésif d'un adhésif électriquement conducteur.

20. Plaque bipolaire selon l'une quelconque des revendications précédentes, **caractérisée en ce que** la première couche de recouvrement (84) et/ou la deuxième couche de recouvrement (58 ; 88) sont réalisées d'une seule pièce.

21. Plaque bipolaire selon l'une quelconque des revendications précédentes, **caractérisée en ce que** la couche de support (86) est réalisée d'une seule pièce.

22. Plaque bipolaire selon l'une quelconque des revendications 1 à 21, **caractérisée en ce que** la couche de support (86) est reliée d'une seule pièce soit à la première couche de recouvrement (54) soit à la deuxième couche de recouvrement (58).

23. Plaque bipolaire selon la revendication 22, **caractérisée en ce que** la première couche de recouvrement (54) et la couche de support (86) sont fabriquées à partir d'une tôle de métal laminée.

24. Plaque bipolaire selon l'une quelconque des revendications précédentes, **caractérisée en ce que** la première couche de support (86) est une structure plissée ou une structure ondulée.

25. Plaque bipolaire selon l'une quelconque des revendications précédentes, **caractérisée en ce que** la première couche de recouvrement (54 ; 84) et la deuxième couche de recouvrement (58 ; 88) sont réalisées de façon étanche au gaz.

26. Plaque bipolaire selon l'une quelconque des revendications précédentes, **caractérisée en ce que** sur la première couche de recouvrement (54 ; 84) et/ou la deuxième couche de recouvrement (58 ; 88) et/ou la couche de support (62 ; 86), un revêtement de protection (112) est disposé.

27. Plaque bipolaire selon l'une quelconque des revendications précédentes, **caractérisée en ce qu'**au moins une ouverture de passage (128) est prévue pour un élément de serrage (46).

28. Plaque bipolaire selon l'une quelconque des revendications précédentes, **caractérisée en ce que** l'élément d'insertion (140 ; 142) est un élément en matériau plein.

29. Plaque bipolaire selon l'une quelconque des revendications précédentes, **caractérisée en ce que** l'élément d'insertion (140 ; 142) est relié à la première couche de recouvrement (54 ; 84) et/ou à la deuxième couche de recouvrement (58 ; 88).

30. Plaque bipolaire selon l'une quelconque des revendications précédentes, **caractérisée en ce qu'**à proximité d'un élément d'insertion (140), la couche de support (62 ; 86) est réalisée de façon à permettre un contournement de l'élément d'insertion (140) par un fluide circulant dans les espaces libres (74 ; 100).

31. Plaque bipolaire selon l'une quelconque des revendications précédentes, **caractérisée en ce que** ladite au moins une ouverture de passage (128) est rendue étanche par rapport aux espaces libres.

32. Procédé de fabrication d'une plaque bipolaire dans lequel une première couche de recouvrement est fabriquée à partir d'un matériau métallique,
une couche de support est fabriquée à partir d'un matériau métallique avec des entretoises transversales et des espaces libres situés entre les entretoises transversales, une deuxième couche de recouvrement est fabriquée à partir d'un matériau métallique, et la première couche de recouvrement et la deuxième couche de recouvrement sont reliées ensemble par l'intermédiaire de la couche de support, **caractérisé en ce qu'**au moins une ouverture de passage est pratiquée dans la plaque bipolaire, et **en ce que** dans la zone de l'ouverture de passage, un élément d'insertion en matériau plein est inséré.

33. Procédé selon la revendication 32, **caractérisé en ce que** la deuxième couche de recouvrement est reliée à la couche de support.

34. Procédé selon la revendication 33, **caractérisé en ce que** la deuxième couche de recouvrement est reliée à la couche de support par brasage ou collage.

35. Procédé selon l'une quelconque des revendications 32 à 34, **caractérisé en ce que** la première couche de recouvrement est reliée à la couche de support par brasage ou collage.

36. Procédé selon l'une quelconque des revendications 32 à 35, **caractérisé en ce que** la première couche de recouvrement et la couche de support sont fabriquées intégralement.

37. Procédé selon la revendication 36, **caractérisé en ce que** la première couche de recouvrement et la couche de support sont fabriquées intégralement par laminage d'une tôle métallique.

38. Procédé selon l'une quelconque des revendications 32 à 37, **caractérisé en ce que** la première couche de recouvrement et/ou la deuxième couche de recouvrement est/sont fabriquée(s) à partir d'une tôle métallique.

39. Procédé selon l'une quelconque des revendications 32 à 38, **caractérisé en ce que** comme matériau de départ pour la première couche de recouvrement et/ou la deuxième couche de recouvrement et/ou la couche de support, une tôle métallique munie d'un revêtement de protection est utilisée.

40. Procédé selon l'une quelconque des revendications 32 à 39, **caractérisé en ce que** sur la plaque bipolaire, une structure de distribution de gaz est fabriquée ou disposée.

41. Procédé selon la revendication 40, **caractérisé en ce que** la structure de distribution de gaz est fabriquée par la création d'une structure spongieuse.

42. Ensemble de bloc de piles à combustible, comprenant un bloc de piles à combustible (162), dans lequel entre au moins une première pile à combustible et une deuxième pile à combustible, une plaque bipolaire (164) selon l'une quelconque des revendications 1 à 31 est disposée.

43. Ensemble de bloc de piles à combustible selon la revendication 42, **caractérisé en ce que** ladite au moins une plaque bipolaire (164) est disposée de telle sorte que des canaux de produit réfrigérant se trouvent de façon substantiellement horizontale.

44. Ensemble de bloc de piles à combustible selon la revendication 42 ou 43, **caractérisé en ce qu'**une pile à combustible est disposée et réalisée de telle sorte que le combustible et l'oxydant peuvent passer par la pile à combustible dans une direction substantiellement verticale.

45. Ensemble de bloc de piles à combustible selon l'une quelconque des revendications 42 à 44,
**caractérisé en ce qu'**une entrée de produit réfrigérant dans des canaux de produit réfrigérant de la plaque bipolaire (164) se trouve sur le côté où sort le milieu le plus chaud.

46. Ensemble de bloc de piles à combustible selon la revendication 45, **caractérisé en ce que** la sortie pour le milieu le plus chaud est une sortie d'air.

47. Ensemble de bloc de piles à combustible selon l'une quelconque des revendications 42 à 46, **caractérisé en ce que** ladite au moins une plaque bipolaire (164) est tournée avec une face frontale ouverte vers une grille de radiateur (166).

48. Ensemble de bloc de piles à combustible selon l'une quelconque des revendications 42 à 47,
**caractérisé en ce que** ladite au moins une plaque bipolaire (164) est disposée en étant tournée avec une face frontale ouverte vers un ventilateur (168).

49. Ensemble de bloc de piles à combustible selon l'une quelconque des revendications 42 à 48,
**caractérisé en ce que** ladite au moins une plaque bipolaire (164) est disposée entre une grille de radiateur (166) et un ventilateur (168).

50. Ensemble de bloc de piles à combustible selon la revendication 49, **caractérisé en ce qu'**entre le bloc de piles à combustible (162) et le ventilateur (168), un recouvrement (184) pour la canalisation d'air de refroidissement est disposé.
